# EUROPEAN PATENT APPLICATION

(11) **EP 4 738 984 A1**
(43) Date of publication of application: **06.05.2026**
(21) Application number: 25212619.8
(22) Date of filing: 31.10.2025
(51) Int. Cl.: H04W 84/12

(54) **METHODS FOR ENHANCED LOW LATENCY TRANSMISSIONS IN 802.11**

(30) Priority: 04.11.2024 US 202463716117 P; 15.10.2025 US 202519359055
(71) Applicant: Apple Inc., Cupertino, CA 95014 (US)
(72) Inventor: HEDAYAT, Ahmad Reza, Cupertino, CA 95014 (US); ABOUELSEOUD, Mohamed, Cupertino, CA 95014 (US); MEHRNOUSH, Morteza, Cupertino, CA 95014 (US); SEOK, Yong Ho, Cupertino, CA 95014 (US); LIU, Yong, Cupertino, CA 95014 (US); BATRA, Anuj, Cupertino, CA 95014 (US)
(74) Representative: Lang, Johannes

(57) **Abstract**

Methods, systems and apparatuses for enhanced low latency transmissions between access points (APs) and non-access points (non-APs). A method by a first station (STA) can include, transmitting, to a second STA , first signaling comprising a first indication associated with a low latency (LL) capability. The method can also include receiving, from the second STA, second signaling comprising a second indication and transmitting, to the second STA and subsequent to receiving the second indication, third signaling in accordance with the LL capability. The method can also include receiving, from the second STA, an acknowledgement associated with the third signaling.

## Description

### FIELD

The present application relates to wireless communications, including techniques for wireless communication among wireless stations and/or access points in a wireless networking system.

### DESCRIPTION OF THE RELATED ART

Wireless communication systems are rapidly growing in usage. Further, wireless communication technology has evolved from voice-only communications to also include the transmission of data, such as Internet and multimedia content. A popular short/intermediate range wireless communication standard is wireless local area network (WLAN). Most modem WLANs are based on the IEEE 802.11 standard (and/or 802.11, for short) and are marketed under the Wi-Fi brand name. WLAN networks link one or more devices to a wireless access point, which in turn provides connectivity to the wider area Internet.

In 802.11 systems, devices that wirelessly connect to each other are referred to as "stations", "mobile stations", "user devices", "user equipment", or STA or UE for short. Wireless stations can be either wireless access points or wireless clients (and/or mobile stations). Access points (APs), which are also referred to as wireless routers, act as base stations for the wireless network. APs transmit and receive radio frequency signals for communication with wireless client devices. APs can also couple to the Internet in a wired and/or wireless fashion. Wireless clients operating on an 802.11 network can be any of various devices such as laptops, tablet devices, smart phones, smart watches, or fixed devices such as desktop computers. Wireless client devices are referred to herein as user equipment (and/or UE for short). Some wireless client devices are also collectively referred to herein as mobile devices or mobile stations (although, as noted above, wireless client devices overall can be stationary devices as well).

Mobile electronic devices can take the form of smart phones, laptops, or tablets that a user typically carries. Wearable devices (also referred to as accessory devices) are a newer form of mobile electronic device, examples including smart watches, ear buds, and smart glasses. Additionally, low-cost low-complexity wireless devices intended for stationary or nomadic deployment are also proliferating as part of the developing "Internet of Things." In other words, there is an increasingly wide range of desired device complexities, capabilities, traffic patterns, and other characteristics.

Some WLANs can utilize multi-link operation (MLO), e.g., using a plurality of channels (e.g., links) concurrently. APs and/or STAs capable of MLO can be referred to as multi-link devices (MLD). For example, APs capable of MLO can be referred to as AP-MLDs and STAs capable of MLO that are not acting as APs can be referred to as non-AP MLDs. Improvements in the field are desired.

### SUMMARY

Embodiments described herein relate to methods, systems and apparatuses for enhanced low latency transmissions between access points (APs) and non-access points (non-APs).

In some embodiments, a method by a first station (STA) can include, transmitting, to a second STA , first signaling comprising a first indication associated with a low latency (LL) capability. The method can also include receiving, from the second STA, second signaling comprising a second indication and transmitting, to the second STA and subsequent to receiving the second indication, third signaling in accordance with the LL capability. The method can also include receiving, from the second STA, an acknowledgement associated with the third signaling.

According to some embodiments, the first indication can comprise a LL indicator set to a non-zero value. Additionally or alternatively, the second indication can comprise a reverse direction (RD) indicator set to a non-zero value and the third signaling can include comprise a RD indicator set to the non-zero value.

In some embodiments, the method can further include transmitting, to the second STA, additional signaling comprising an additional indication. Additionally or alternatively, the additional indication can include an other RD indicator set to a value of zero, according to some embodiments.

According to some embodiments, the second signaling can be received in one of a data frame, a quality of service (QoS) null frame, a clear to send (CTS) frame, or a transmission sharing (TXS) frame. Additionally, the method can include exchanging, with the second STA, one or more parameters associated with a LL session, according to some embodiments. Furthermore, the method can include disabling, at a time associated with a parameter of the one or more parameters, the LL session.

In some embodiments, the first signaling can be indicated in one of a control response frame (CRF), a block acknowledgement (BA) frame, an initial control response (ICR) frame, or a multi-STA BA (M-BA) frame. According to some embodiments, the method can include receiving, prior to the first signaling, initial signaling comprising an initial control frame (ICF).

According to other embodiments, a method by a first station STA can include transmitting initial signaling to a second STA and receiving, from the second STA, first signaling comprising a first indication associated with a LL capability. The method can also include transmitting, to the second STA, second signaling comprising a second indication and receiving, from the second STA and subsequent to transmitting the second indication, third signaling in accordance with the LL capability. The method can also include transmitting, to the second STA, acknowledgement signaling associated with the third signaling.

According to some embodiments, an apparatus can include a processor configured to, when executing instructions stored in a memory, cause an access point (AP) to perform operations including receiving, from one or more respective station STAs, respective first signaling comprising one or more first indications associated with a LL capability. Additionally, the operations can also include transmitting, to the one or more respective STAs, respective second signaling comprising one or more second indications and receiving, from the one or more respective STAs, respective third signaling in accordance with the LL capability. The operations can also include transmitting, to the one or more respective STAs, acknowledgment signaling associated with the third signaling, according to some embodiments.

In some embodiments, the one or more respective STAs can be non-enhanced multi-link single radio (non-EMLSR) STAs. Additionally or alternatively, the respective second signaling can be transmitted in one or more clear to send (CTS) frames which can be transmitted sequentially to the one or more respective STAs in an order corresponding to an order in which the one or more first indications were received or in a trigger frame (TF) transmitted to the one or more respective STAs, according to some embodiments.

According to other embodiments, the one or more respective STAs can be enhanced multi-link single radio (EMLSR) STAs and the respective second signaling can be transmitted in a CTS frame which indicates for at least one of the EMLSR STAs to transition to a listening mode.

This Summary is intended to provide a brief overview of some of the subject matter described in this document. Accordingly, it will be appreciated that the above-described features are merely examples and should not be construed to narrow the scope or spirit of the subject matter described herein in any way. Other features, aspects, and advantages of the subject matter described herein will become apparent from the following Detailed Description, Figures, and Claims.

### BRIEF DESCRIPTION OF THE DRAWINGS

A better understanding of the present subject matter can be obtained when the following detailed description of the embodiments is considered in conjunction with the following drawings.
Figure 1 illustrates an example wireless communication system, according to some embodiments.
Figure 2 illustrates an example simplified block diagram of a wireless device, according to some embodiments.
Figure 3 illustrates an example WLAN communication system, according to some embodiments.
Figure 4 illustrates an example simplified block diagram of a WLAN Access Point (AP), according to some embodiments.
Figure 5 illustrates an example simplified block diagram of a wireless station (STA), according to some embodiments.
Figure 6 illustrates an example simplified block diagram of a wireless node, according to some embodiments.
Figures 7-8 illustrates examples of MLDs, according to some embodiments.
Figures 9A-B illustrate example aspects of a channel access competition between devices, according to some embodiments.
Figures 10A-B illustrates example low latency (LL) signaling in a transmission opportunity (TXOP), according to some embodiments.
Figure 11 is a communication flow diagram illustrating an example method of enhanced low latency transmissions, according to some embodiments.
Figure 12 illustrates an example of CRF frame formats for LL signaling, according to some embodiments.
Figure 13 illustrates an example of ICR frame formats for LL Signaling, according to some embodiments.
Figures 14A-C illustrate example scenarios for LL signaling in CRFs and the different types of responses which can occur in uplink (UL) or downlink (DL), according to some embodiments.
Figures 14D-F illustrate example scenarios for LL signaling in ICRs and the different types of responses which can occur in uplink (UL) or downlink (DL), according to some embodiments.
Figures 15A-B illustrate example scenarios for LL Signaling for non-EMLSR STAs, according to some embodiments.
Figures 16A-B illustrate example scenarios of LL Signaling for EMLSR STAs, according to some embodiments.
Figures 17A-B illustrate example aspects of LL session attributes and enablement, according to some embodiments.
Figures 18A-C illustrate examples of enhanced RD protocols, according to some embodiments.
Figures 19A-C illustrate additional examples of enhanced RD protocols involving a DL TXOP, according to some embodiments.
Figures 20A-C illustrate additional examples of enhanced RD protocols involving a UL TXOP, according to some embodiments.

While the features described herein are susceptible to various modifications and alternative forms, specific embodiments thereof are shown by way of example in the drawings and are herein described in detail. It should be understood, however, that the drawings and detailed description thereto are not intended to be limiting to the particular form disclosed, but on the contrary, the intention is to cover all modifications, equivalents and alternatives falling within the spirit and scope of the subject matter as defined by the appended claims.

### DETAILED DESCRIPTION

### Acronyms

Various acronyms are used throughout the present application. Definitions of the most prominently used acronyms that can appear throughout the present application are provided below:
**UE:** User Equipment
**AP:** Access Point
**STA:** Wireless Station
**TX:** Transmission/Transmit
**RX:** Reception/Receive
**DL:** Downlink
**UL:** Uplink
**MLD:** Multi-link Device
**LAN:** Local Area Network
**WLAN:** Wireless LAN
**RAT:** Radio Access Technology
**LL:** Low Latency
**ACK:** Acknowledgment
**BA:** Block Acknowledgment
**NACK:** Negative Acknowledgment
**M-BA:** Multi-STA Block Acknowledgment
**OTA:** Over the Air
**SU:** Single-User
**MU:** Multi-User
**MAC:** Media Access Control
**CPE:** Client Privacy Enhanced
**BSS:** Basic Service Set
**OBSS:** Overlapping Basic Service Set
**SN:** Sequence Number
**PN:** Packet Number
**TID:** Traffic Identifier
**AID:** Association Identifier
**SAP:** Service Access Point
**PPDU:** Physical Protocol Data Unit
**TXOP:** Transmission Opportunity
**P2P:** Peer-to-Peer
**RD:** Reverse Direction
**RDG:** Reverse Direction Grant
**CTS:** Clear to Send
**TXS:** Triggered Transmission Opportunity Sharing
**TA:** Transmitter Address
**RA:** Receiver Address
**ICF:** Initial Control Frame
**ICR:** Initial Control Response Frame
**A-MPDU:** Aggregate-MAC Protocol Data Unit
**LLI:** Low Latency Indication
**CRF:** Control Response Frame
**FCS:** Frame Check Sequence
**HE TB PPDU:** High Efficiency Transport Block Physical Protocol Data Unit
**QoS:** Quality of Service
**TF:** Trigger Frame
**EMLSR:** Enhanced Multi-Link Single Radio
**BSR:** Buffer Status Report
**BSRP:** Buffer Status Report Poll
**UHR:** Ultra-High Reliability
**OMN:** Operating Mode Notification
**SSN:** Starting Sequence Number

### Terminology

The following is a glossary of terms used in this disclosure:
**Memory Medium** - Any of various types of non-transitory memory devices or storage devices. The term "memory medium" is intended to include an installation medium, e.g., a CD-ROM, floppy disks, or tape device; a computer system memory or random access memory such as DRAM, DDR RAM, SRAM, EDO RAM, Rambus RAM, etc.; a non-volatile memory such as a Flash, magnetic media, e.g., a hard drive, or optical storage; registers, or other similar types of memory elements, etc. The memory medium can include other types of non-transitory memory as well or combinations thereof. In addition, the memory medium can be located in a first computer system in which the programs are executed, or can be located in a second different computer system which connects to the first computer system over a network, such as the Internet. In the latter instance, the second computer system can provide program instructions to the first computer for execution. The term "memory medium" can include two or more memory mediums which can reside in different locations, e.g., in different computer systems that are connected over a network. The memory medium can store program instructions (e.g., embodied as computer programs) that can be executed by one or more processors.

**Carrier Medium** - a memory medium as described above, as well as a physical transmission medium, such as a bus, network, and/or other physical transmission medium that conveys signals such as electrical, electromagnetic, or digital signals.

**Computer System** - any of various types of computing or processing systems, including a personal computer system (PC), mainframe computer system, workstation, network appliance, Internet appliance, personal digital assistant (PDA), television system, grid computing system, or other device or combinations of devices. In general, the term "computer system" can be broadly defined to encompass any device (and/or combination of devices) having at least one processor that executes instructions from a memory medium.

**Mobile Device (and/or Mobile Station)** - any of various types of computer systems devices which are mobile or portable and which performs wireless communications using WLAN communication. Examples of mobile devices include mobile telephones or smart phones (e.g., iPhone^{™}, Android^{™}-based phones), and tablet computers such as iPad^{™}, Samsung Galaxy^{™}, etc. Various other types of devices would fall into this category if they include Wi-Fi or both cellular and Wi-Fi communication capabilities, such as laptop computers (e.g., MacBook^{™}), portable gaming devices (e.g., Nintendo DS^{™}, PlayStation Portable^{™}, Gameboy Advance^{™}, iPhone^{™}), portable Internet devices, and other handheld devices, as well as wearable devices such as smart watches, smart glasses, headphones, pendants, earpieces, etc. In general, the term "mobile device" can be broadly defined to encompass any electronic, computing, and/or telecommunications device (and/or combination of devices) which is easily transported by a user and capable of wireless communication using WLAN or Wi-Fi.

**Wireless Device (and/or Wireless Station)** - any of various types of computer systems devices which performs wireless communications using WLAN communications. As used herein, the term "wireless device" can refer to a mobile device, as defined above, or to a stationary device, such as a stationary wireless client or a wireless base station. For example, a wireless device can be any type of wireless station of an 802.11 system, such as an access point (AP) or a client station (STA or UE). Further examples include televisions, media players (e.g., AppleTV^{™}, Roku^{™}, Amazon FireTV^{™}, Google Chromecast^{™}, etc.), refrigerators, laundry machines, thermostats, and so forth.

**WLAN** - The term "WLAN" has the full breadth of its ordinary meaning, and at least includes a wireless communication network or RAT that is serviced by WLAN access points and which provides connectivity through these access points to the Internet. Most modem WLANs are based on IEEE 802.11 standards and are marketed under the name "Wi-Fi". A WLAN network is different from a cellular network.

**Processing Element** - refers to various implementations of digital circuitry that perform a function in a computer system. Additionally, processing element can refer to various implementations of analog or mixed-signal (combination of analog and digital) circuitry that perform a function (and/or functions) in a computer or computer system. Processing elements include, for example, circuits such as an integrated circuit (IC), ASIC (Application Specific Integrated Circuit), portions or circuits of individual processor cores, entire processor cores, individual processors, programmable hardware devices such as a field programmable gate array (FPGA), and/or larger portions of systems that include multiple processors.

**Automatically** - refers to an action or operation performed by a computer system (e.g., software executed by the computer system) or device (e.g., circuitry, programmable hardware elements, ASICs, etc.), without user input directly specifying or performing the action or operation. Thus, the term "automatically" is in contrast to an operation being manually performed or specified by the user, where the user provides input to directly perform the operation. An automatic procedure can be initiated by input provided by the user, but the subsequent actions that are performed "automatically" are not specified by the user, e.g., are not performed "manually", where the user specifies each action to perform. For example, a user filling out an electronic form by selecting each field and providing input specifying information (e.g., by typing information, selecting check boxes, radio selections, etc.) is filling out the form manually, even though the computer system must update the form in response to the user actions. The form can be automatically filled out by the computer system where the computer system (e.g., software executing on the computer system) analyzes the fields of the form and fills in the form without any user input specifying the answers to the fields. As indicated above, the user can invoke the automatic filling of the form, but is not involved in the actual filling of the form (e.g., the user is not manually specifying answers to fields but rather they are being automatically completed). The present specification provides various examples of operations being automatically performed in response to actions the user has taken.

**Concurrent** - refers to parallel execution or performance, where tasks, processes, signaling, messaging, or programs are performed in an at least partially overlapping manner. For example, concurrency can be implemented using "strong" or strict parallelism, where tasks are performed (at least partially) in parallel on respective computational elements, or using "weak parallelism", where the tasks are performed in an interleaved manner, e.g., by time multiplexing of execution threads.

**Configured to** - Various components can be described as "configured to" perform a task or tasks. In such contexts, "configured to" is a broad recitation generally meaning "having structure that" performs the task or tasks during operation. As such, the component can be configured to perform the task even when the component is not currently performing that task (e.g., a set of electrical conductors can be configured to electrically connect a module to another module, even when the two modules are not connected). In some contexts, "configured to" can be a broad recitation of structure generally meaning "having circuitry that" performs the task or tasks during operation. As such, the component can be configured to perform the task even when the component is not currently on. In general, the circuitry that forms the structure corresponding to "configured to" can include hardware circuits.

Various components can be described as performing a task or tasks, for convenience in the description. Such descriptions should be interpreted as including the phrase "configured to." Reciting a component that is configured to perform one or more tasks is expressly intended not to invoke 35 U.S.C. § 112(f) interpretation for that component.

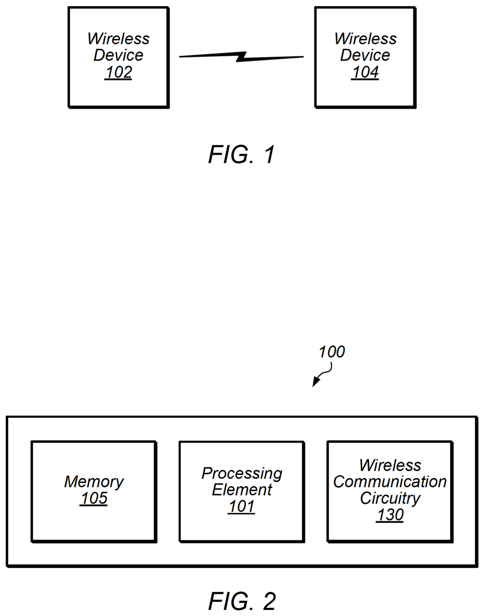

### Figures 1-2 - Wireless Communication System

Figure 1 illustrates an exemplary (and simplified) wireless communication system in which aspects of this disclosure can be implemented. It is noted that the system of Figure 1 is merely one example of a possible system, and embodiments of this disclosure can be implemented in any of various systems, as desired.

As shown, the exemplary wireless communication system includes a ("first") wireless device 102 in communication with another ("second") wireless device 104. The first wireless device 102 and the second wireless device 104 can communicate wirelessly using any of a variety of wireless communication techniques, potentially including ranging wireless communication techniques.

As one possibility, the first wireless device 102 and the second wireless device 104 can perform ranging using wireless local area networking (WLAN) communication technology (e.g., IEEE 802.11 / Wi-Fi based communication) and/or techniques based on WLAN wireless communication. One or both of the wireless device 102 and the wireless device 104 can also be capable of communicating via one or more additional wireless communication protocols, such as any of Bluetooth (BT), Bluetooth Low Energy (BLE), near field communication (NFC), LTE, LTE-Advanced (LTE-A), NR, ultra-wideband (UWB), etc.

The wireless devices 102 and 104 can be any of a variety of types of wireless device. As one possibility, one or more of the wireless devices 102 and/or 104 can be a substantially portable wireless user equipment (UE) device, such as a smart phone, hand-held device, a wearable device such as a smart watch, a tablet, a motor vehicle, or virtually any type of wireless device. As another possibility, one or more of the wireless devices 102 and/or 104 can be a substantially stationary device, such as a set top box, media player (e.g., an audio or audiovisual device), gaming console, desktop computer, appliance, door, access point, base station, or any of a variety of other types of devices.

Each of the wireless devices 102 and 104 can include wireless communication circuitry configured to facilitate the performance of wireless communication, which can include various digital and/or analog radio frequency (RF) components, a processor that is configured to execute program instructions stored in memory, a programmable hardware element such as a field-programmable gate array (FPGA), and/or any of various other components. The wireless device 102 and/or the wireless device 104 can perform any of the method embodiments described herein, or any portion of any of the method embodiments described herein, using any or all of such components.

Each of the wireless devices 102 and 104 can include one or more antennas for communicating using one or more wireless communication protocols. In some cases, one or more parts of a receive and/or transmit chain can be shared between multiple wireless communication standards; for example, a device might be configured to communicate using either of Bluetooth or Wi-Fi using partially or entirely shared wireless communication circuitry (e.g., using a shared antenna and/or shared radio components). The shared communication circuitry can include a single antenna, or can include multiple antennas (e.g., for MIMO) for performing wireless communications. Alternatively, a device can include separate transmit and/or receive chains (e.g., including separate antennas and other radio components) for each wireless communication protocol with which it is configured to communicate. As a further possibility, a device can include one or more radios or radio components which are shared between multiple wireless communication protocols, and one or more radios or radio components which are used exclusively by a single wireless communication protocol. For example, a device might include a shared radio for communicating using one or more of LTE and/or 5G NR, and separate radios for communicating using Wi-Fi, UWB, and/or Bluetooth. Other configurations are also possible.

As previously noted, aspects of this disclosure can be implemented in conjunction with the wireless communication system of Figure 1. For example, a wireless device (e.g., either of wireless devices 102 or 104) can be configured to perform methods for robust discovery of a new access point (AP) in AP MLD, robust link addition to an AP MLD association, AP beaconing modes when the AP is added or deleted to/from an AP MLD, and robust BSS transition management (BTM) signaling to steer a non-AP MLD to a best AP MLD and to most suitable APs, as well as privacy improvements for associated non-AP MLD.

Figure 2 illustrates an exemplary wireless device 100 (e.g., corresponding to wireless devices 102 and/or 104) that can be configured for use in conjunction with various aspects of the present disclosure. The device 100 can be any of a variety of types of devices and can be configured to perform any of a variety of types of functionality. The device 100 can be a substantially portable device or can be a substantially stationary device, potentially including any of a variety of types of devices. The device 100 can be configured to perform one or more ranging wireless communication techniques or features, such as any of the techniques or features illustrated and/or described subsequently herein with respect to any or all of the Figures.

As shown, the device 100 can include a processing element 101. The processing element can include or be coupled to one or more memory elements. For example, the device 100 can include one or more memory media (e.g., memory 105), which can include any of a variety of types of memory and can serve any of a variety of functions. For example, memory 105 could be RAM serving as a system memory for processing element 101. Other types and functions are also possible.

Additionally, the device 100 can include wireless communication circuitry 130. The wireless communication circuitry can include any of a variety of communication elements (e.g., antenna(s) for wireless communication, analog and/or digital communication circuitry/controllers, etc.) and can enable the device to wirelessly communicate using one or more wireless communication protocols.

Note that in some cases, the wireless communication circuitry 130 can include its own processing element (e.g., a baseband processor), e.g., in addition to the processing element 101. For example, the processing element 101 can be an 'application processor' whose primary function can be to support application layer operations in the device 100, while the wireless communication circuitry 130 can be a 'baseband processor' whose primary function can be to support baseband operations (e.g., to facilitate wireless communication between the device 100 and other devices) in the device 100. In other words, in some cases the device 100 can include multiple processing elements (e.g., can be a multi-processor device). Other configurations (e.g., instead of or in addition to an application processor / baseband processor configuration) utilizing a multi-processor architecture are also possible.

The device 100 can additionally include any of a variety of other components (not shown) for implementing device functionality, depending on the intended functionality of the device 100, which can include further processing and/or memory elements (e.g., audio processing circuitry), one or more power supply elements (which can rely on battery power and/or an external power source) user interface elements (e.g., display, speaker, microphone, camera, keyboard, mouse, touchscreen, etc.), and/or any of various other components.

The components of the device 100, such as processing element 101, memory 105, and wireless communication circuitry 130, can be operatively coupled via one or more interconnection interfaces, which can include any of a variety of types of interfaces, possibly including a combination of multiple types of interface. As one example, a USB high-speed inter-chip (HSIC) interface can be provided for inter-chip communications between processing elements. Alternatively (and/or in addition), a universal asynchronous receiver transmitter (UART) interface, a serial peripheral interface (SPI), inter-integrated circuit (I2C), system management bus (SMBus), and/or any of a variety of other communication interfaces can be used for communications between various device components. Other types of interfaces (e.g., intra-chip interfaces for communication within processing element 101, peripheral interfaces for communication with peripheral components within or external to device 100, etc.) can also be provided as part of device 100.

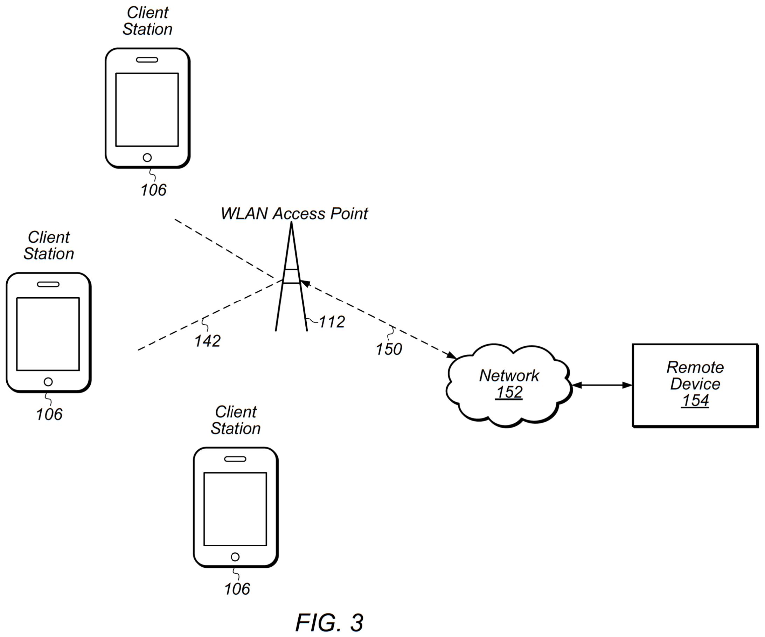

### Figure 3 - WLAN System

Figure 3 illustrates an example WLAN system according to some embodiments. As shown, the exemplary WLAN system includes a plurality of wireless client stations or devices (e.g., STAs or user equipment (UEs)), 106 that are configured to communicate over a wireless communication channel 142 with an Access Point (AP) 112. The AP 112 can be a Wi-Fi access point. The AP 112 can communicate via a wired and/or a wireless communication channel 150 with one or more other electronic devices (not shown) and/or another network 152, such as the Internet. Additional electronic devices, such as the remote device 154, can communicate with components of the WLAN system via the network 152. For example, the remote device 154 can be another wireless client station, a server associated with an application executing on one of the STAs 106, etc. The WLAN system can be configured to operate according to any of various communications standards, such as the various IEEE 802.11 standards. In some embodiments, at least one wireless device 106 is configured to communicate directly with one or more neighboring mobile devices, without use of the access point 112.

Further, in some embodiments, a wireless device 106 (which can be an exemplary implementation of device 100) can be configured to perform methods for robust discovery of a new access point (AP) in AP MLD, robust link addition to an AP MLD association, AP beaconing modes when the AP is added or deleted to/from an AP MLD, and robust BSS transition management (BTM) signaling to steer a non-AP MLD to a best AP MLD and to most suitable APs, as well as privacy improvements for associated non-AP MLD.

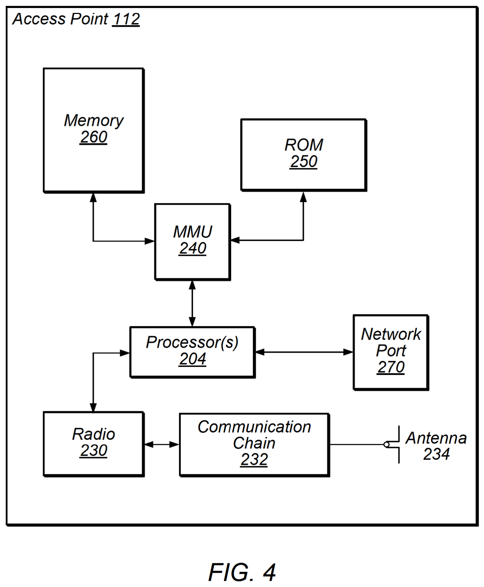

### Figure 4 - Access Point Block Diagram

Figure 4 illustrates an exemplary block diagram of an access point (AP) 112, which can be one possible exemplary implementation of the device 100 illustrated in Figure 4. It is noted that the block diagram of the AP of Figure 4 is only one example of a possible system. As shown, the AP 112 can include processor(s) 204 which can execute program instructions for the AP 112. The processor(s) 204 can also be coupled (directly or indirectly) to memory management unit (MMU) 240, which can be configured to receive addresses from the processor(s) 204 and to translate those addresses to locations in memory (e.g., memory 260 and read only memory (ROM) 250) or to other circuits or devices.

The AP 112 can include at least one network port 270. The network port 270 can be configured to couple to a wired network and provide a plurality of devices, such as mobile devices 106, access to the Internet. For example, the network port 270 (and/or an additional network port) can be configured to couple to a local network, such as a home network or an enterprise network. For example, port 270 can be an Ethernet port. The local network can provide connectivity to additional networks, such as the Internet.

The AP 112 can include at least one antenna 234, which can be configured to operate as a wireless transceiver and can be further configured to communicate with mobile device 106 via wireless communication circuitry 230. The antenna 234 communicates with the wireless communication circuitry 230 via communication chain 232. Communication chain 232 can include one or more receive chains, one or more transmit chains or both. The wireless communication circuitry 230 can be configured to communicate via Wi-Fi or WLAN, e.g., 802.11. The wireless communication circuitry 230 can also, or alternatively, be configured to communicate via various other wireless communication technologies, including, but not limited to, Long-Term Evolution (LTE), LTE Advanced (LTE-A), 5G NR, UWB, etc., for example when the AP is co-located with a base station in case of a small cell, or in other instances when it can be desirable for the AP 112 to communicate via various different wireless communication technologies.

Further, in some embodiments, as further described below, AP 112 can be configured to perform methods for robust discovery of a new access point (AP) in AP MLD, robust link addition to an AP MLD association, AP beaconing modes when the AP is added or deleted to/from an AP MLD, and robust BSS transition management (BTM) signaling to steer a non-AP MLD to a best AP MLD and to most suitable APs, as well as privacy improvements for associated non-AP MLD.

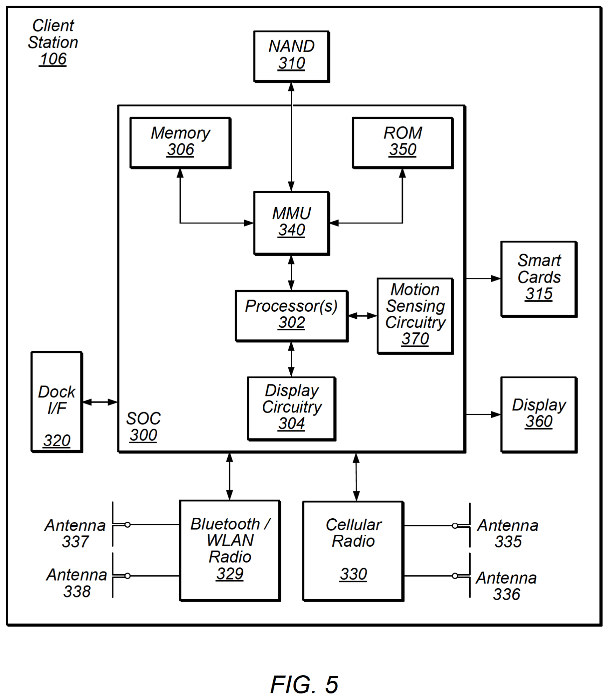

### Figure 5 - Client Station Block Diagram

Figure 5 illustrates an example simplified block diagram of a client station 106, which can be one possible exemplary implementation of the device 100 illustrated in Figure 4. According to embodiments, client station 106 can be a user equipment (UE) device, a mobile device or mobile station, and/or a wireless device or wireless station. As shown, the client station 106 can include a system on chip (SOC) 300, which can include portions for various purposes. The SOC 300 can be coupled to various other circuits of the client station 106. For example, the client station 106 can include various types of memory (e.g., including NAND flash 310), a connector interface (I/F) (and/or dock) 320 (e.g., for coupling to a computer system, dock, charging station, etc.), the display 360, cellular communication circuitry (e.g., cellular radio) 330 such as for 5G NR, LTE, etc., and short to medium range wireless communication circuitry (e.g., Bluetooth^{™}/WLAN radio) 329 (e.g., Bluetooth^{™} and WLAN circuitry). The client station 106 can further include one or more smart cards 315 that incorporate SIM (Subscriber Identity Module) functionality, such as one or more UICC(s) (Universal Integrated Circuit Card(s)). The cellular communication circuitry 330 can couple to one or more antennas, such as antennas 335 and 336 as shown. The short to medium range wireless communication circuitry 329 can also couple to one or more antennas, such as antennas 337 and 338 as shown. Alternatively, the short to medium range wireless communication circuitry 329 can couple to the antennas 335 and 336 in addition to, or instead of, coupling to the antennas 337 and 338. The short to medium range wireless communication circuitry 329 can include multiple receive chains and/or multiple transmit chains for receiving and/or transmitting multiple spatial streams, such as in a multiple-input multiple output (MIMO) configuration. Some or all components of the short to medium range wireless communication circuitry 329 and/or the cellular communication circuitry 330 can be used for ranging communications, e.g., using WLAN, Bluetooth, and/or cellular communications.

As shown, the SOC 300 can include processor(s) 302, which can execute program instructions for the client station 106 and display circuitry 304, which can perform graphics processing and provide display signals to the display 360. The SOC 300 can also include motion sensing circuitry 370 which can detect motion of the client station 106, for example using a gyroscope, accelerometer, and/or any of various other motion sensing components. The processor(s) 302 can also be coupled to memory management unit (MMU) 340, which can be configured to receive addresses from the processor(s) 302 and translate those addresses to locations in memory (e.g., memory 306, read only memory (ROM) 350, NAND flash memory 310) and/or to other circuits or devices, such as the display circuitry 304, cellular communication circuitry 330, short range wireless communication circuitry 329, connector interface (I/F) 320, and/or display 360. The MMU 340 can be configured to perform memory protection and page table translation or set up. In some embodiments, the MMU 340 can be included as a portion of the processor(s) 302.

As noted above, the client station 106 can be configured to communicate wirelessly directly with one or more neighboring client stations. The client station 106 can be configured to communicate according to a WLAN RAT for communication in a WLAN network, such as that shown in Figure 3 or for ranging as shown in Figure 1.

As described herein, the client station 106 can include hardware and software components for implementing the features described herein. For example, the processor 302 of the client station 106 can be configured to implement part or all of the features described herein, e.g., by executing program instructions stored on a memory medium (e.g., a non-transitory computer-readable memory medium). Alternatively (and/or in addition), processor 302 can be configured as a programmable hardware element, such as an FPGA (Field Programmable Gate Array), or as an ASIC (Application Specific Integrated Circuit). Alternatively (and/or in addition) the processor 302 of the UE 106, in conjunction with one or more of the other components 300, 304, 306, 310, 315, 320, 329, 330, 335, 336, 337, 338, 340, 350, 360, 370 can be configured to implement part or all of the features described herein.

In addition, as described herein, processor 302 can include one or more processing elements. Thus, processor 302 can include one or more integrated circuits (ICs) that are configured to perform the functions of processor 302. In addition, each integrated circuit can include circuitry (e.g., first circuitry, second circuitry, etc.) configured to perform the functions of processor(s) 204.

Further, as described herein, cellular communication circuitry 330 and short-range wireless communication circuitry 329 can each include one or more processing elements. In other words, one or more processing elements can be included in cellular communication circuitry 330 and also in short range wireless communication circuitry 329. Thus, each of cellular communication circuitry 330 and short-range wireless communication circuitry 329 can include one or more integrated circuits (ICs) that are configured to perform the functions of cellular communication circuitry 330 and short-range wireless communication circuitry 329, respectively. In addition, each integrated circuit can include circuitry (e.g., first circuitry, second circuitry, etc.) configured to perform the functions of cellular communication circuitry 330 and short-range wireless communication circuitry 329.

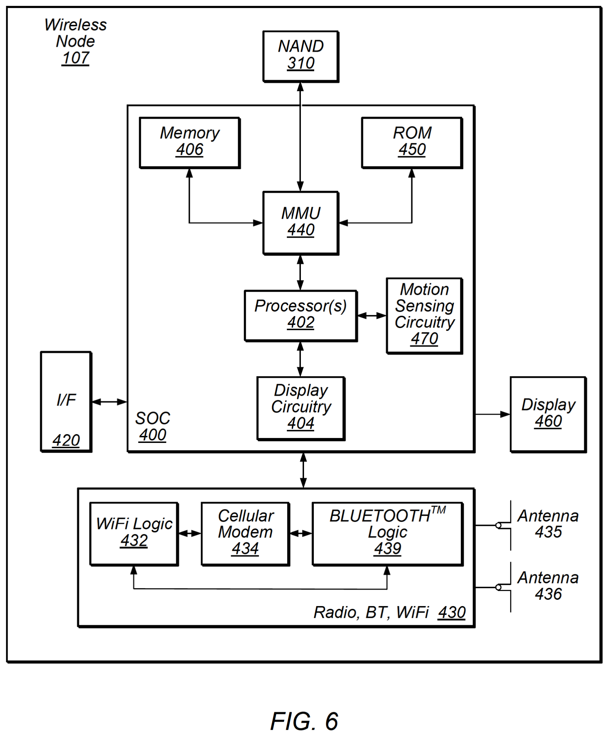

### Figure 6 - Wireless Node Block Diagram

Figure 6 illustrates one possible block diagram of a wireless node 107, which can be one possible exemplary implementation of the device 100 illustrated in Figure 6. As shown, the wireless node 107 can include a system on chip (SOC) 400, which can include portions for various purposes. For example, as shown, the SOC 400 can include processor(s) 402 which can execute program instructions for the wireless node 107, and display circuitry 404 which can perform graphics processing and provide display signals to the display 460. The SOC 400 can also include motion sensing circuitry 470 which can detect motion of the wireless node 107, for example using a gyroscope, accelerometer, and/or any of various other motion sensing components. The processor(s) 402 can also be coupled to memory management unit (MMU) 440, which can be configured to receive addresses from the processor(s) 402 and translate those addresses to locations in memory (e.g., memory 406, read only memory (ROM) 450, flash memory 410). The MMU 440 can be configured to perform memory protection and page table translation or set up. In some embodiments, the MMU 440 can be included as a portion of the processor(s) 402.

As shown, the SOC 400 can be coupled to various other circuits of the wireless node 107. For example, the wireless node 107 can include various types of memory (e.g., including NAND flash 410), a connector interface 420 (e.g., for coupling to a computer system, dock, charging station, etc.), the display 460, and wireless communication circuitry 430 (e.g., for 5G NR, LTE, LTE-A, Bluetooth, Wi-Fi, NFC, UWB, etc.).

The wireless node 107 can include at least one antenna, and in some embodiments, multiple antennas 435 and 436, for performing wireless communication with base stations and/or other devices. For example, the wireless node 107 can use antennas 435 and 436 to perform the wireless communication. As noted above, the wireless node 107 can in some embodiments be configured to communicate wirelessly using a plurality of wireless communication standards or radio access technologies (RATs).

The wireless communication circuitry 430 can include Wi-Fi Logic 432, a Cellular Modem 434, and Bluetooth Logic 439. The Wi-Fi Logic 432 is for enabling the wireless node 107 to perform Wi-Fi communications, e.g., on an 802.11 network. The Bluetooth Logic 439 is for enabling the wireless node 107 to perform Bluetooth communications. The cellular modem 434 can be capable of performing cellular communication according to one or more cellular communication technologies. Some or all components of the wireless communication circuitry 430 can be used for ranging communications, e.g., using WLAN, Bluetooth, and/or cellular communications.

As described herein, wireless node 107 can include hardware and software components for implementing embodiments of this disclosure. For example, one or more components of the wireless communication circuitry 430 (e.g., Wi-Fi Logic 432) of the wireless node 107 can be configured to implement part or all of the methods described herein, e.g., by a processor executing program instructions stored on a memory medium (e.g., a non-transitory computer-readable memory medium), a processor configured as an FPGA (Field Programmable Gate Array), and/or using dedicated hardware components, which can include an ASIC (Application Specific Integrated Circuit).

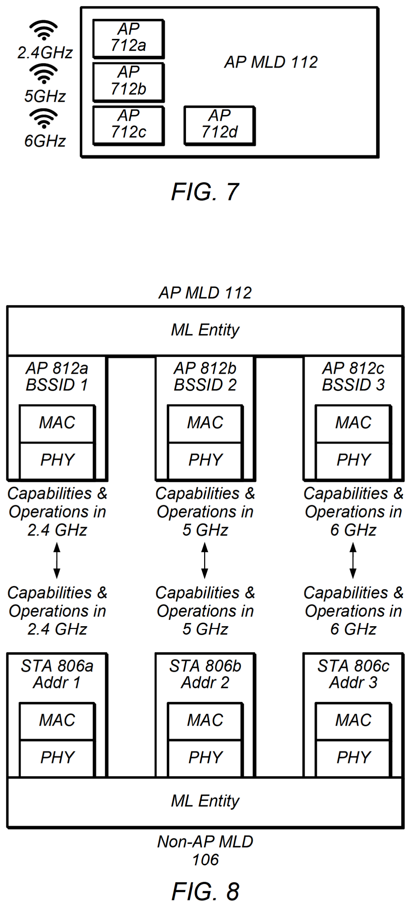

### Figures 7-8 - Multi-Link Device (MLD) operation

One or more IEEE 802.11 releases, such as IEEE 802.11bi, can include Multi-link Device (MLD) capabilities. In current implementations, an access point (AP) Multi Link Device (MLD) node can manage its affiliated APs. Thus, an AP MLD node can modify, add, and/or subtract affiliated APs. The AP MLD can do so for a variety of reasons, e.g., to increase capacity, manage Basic Service Sets (BSSs) interference and/or coverage, including by switching one or more APs to operate in channels with less interference and/or steering associated non-AP MLD nodes to operate on better performing APs and/or AP MLD nodes.

Figure 7 illustrates an AP MLD 112, according to some embodiments. The AP MLD can operate any number of affiliated APs, e.g., APs 712a, 712b, 712c, and 712d in the illustrated example. The affiliated APs can operate on any of various frequency bands. Affiliated APs can operate on different frequency ranges (e.g., channels) of the same band, or on different frequency bands.

The AP MLD can provide the affiliated APs from a single physical device, e.g., a single shared housing and potentially using one or more the same antenna(s). In some embodiments, the AP MLD can provide the APs from multiple distinct devices (e.g., a first device can provide one or more APs, a second device can provide a different one or more APs, etc.). In some embodiments, various affiliated APs can be separated spatially (e.g., using beams in different directions, using different antennas with a shared housing (e.g., antennas of a same physical device), and/or of different devices, etc.).

In some embodiments, spatially separated affiliated APs can operate on a same (or overlapping) channel(s).

Figure 8 illustrates an AP MLD 112 in communication with a non-AP MLD 106, according to some embodiments.

As shown, the AP MLD 112 can operate three affiliated APs. In the illustrated example, AP 812a can operate in a 2.4 GHz band, AP 812b can operate in a 5 GHz band, and AP 812c can operate in a 6 GHz band. It will be appreciated that any number of affiliated APs can be used in any combination of bands. For example, the AP MLD can operate multiple affiliated APs in one band and/or can possibly not operate any affiliated APs in a band. The affiliated APs can include components that process one or more layers, e.g., media access control (MAC) and/or physical (PHY) layers, among various possibilities. The affiliated APs can use different basic service sets (BSS) and/or different BSS identifiers (BSSID), e.g., BSSIDs 1-3.

As shown, the non-AP MLD 106 can operate three affiliated STAs, e.g., corresponding to the three affiliated APs. In the illustrated example, STA 806a can operate in the 2.4 GHz band, STA 806b can operate in a 5 GHz band, and STA 806c can operate in a 6 GHz band. The STAs can communicate with the corresponding APs. It will be appreciated that any number of affiliated STAs can be used in any combination of bands. For example, the non-AP MLD can operate multiple affiliated STAs in one band and/or can possibly not operate any affiliated STAs in a band. The non-AP MLD can operate STAs corresponding to some, none, or all of the APs of the AP MLD. The affiliated STAs can include various layers, e.g., PHY and/or MAC layers, among various possibilities. The affiliated STAs can use different addresses, e.g., Addr 1-3.

The non-AP MLD can provide the affiliated STAs from a single physical device, e.g., a single shared housing and potentially using one or more of the same antenna(s). In some embodiments, the non-AP MLD can provide the STAs from multiple distinct devices (e.g., a first device can provide one or more STAs, a second device can provide a different one or more STAs, etc.). In some embodiments, various affiliated STAs can be separated spatially (e.g., using beams in different directions, using different antennas with a shared housing (e.g., antennas of a same physical device), and/or of different devices, etc.).

In some implementations, the various affiliated STAs and APs can communicate concurrently / simultaneously. For example, STA 806a can exchange uplink and/or downlink data with AP 812a on a first link, while STA 806b exchanges uplink and/or downlink data with AP 812b on a second link, etc. It will be appreciated that such concurrent communication can include (e.g., different) data being exchanged at the same time, at least partially overlapping times, and/or different times on different links. For example, data between the AP MLD and non-AP MLD can be routed over the first available link and/or a link selected based on other criteria (e.g., lowest energy use, etc.). For example, a first packet or portion of data can be sent over a first link and concurrently a second packet or portion of data can be sent over a second link.

In some embodiments, the AP MLD and non-AP MLD can include respective ML entities. An ML entity can provide upper MAC functionality that control the separate APs and/or STAs and can control traffic delivery through available links, e.g., between the various APs and STAs. The respective MLDs (e.g., AP and non-AP) can have only one respective MAC Service Access Point (SAP) interface. The ML entity can manage this interface. The ML entity can manage transmission buffering (e.g., bookkeeping and link selection in the transmitter) and data re-order buffering in reception (e.g., combination of the data that is transmitted in different links).

The AP MLD 112 and non-AP MLD 106 can exchange information about their respective operations, operating parameters, and/or capabilities.

The non-AP MLD can have various capabilities for operating a STA in a particular band. The capabilities can be different for different bands. For example, the capabilities in a band can describe the maximum (e.g., fastest, most flexible, most powerful, highest throughput, etc.) parameter values that a STA of the non-AP MLD can use. Operations or operating parameters can describe the parameter values that are currently in use or planned to be in use at a future time.

For example, the parameters can include an applicable PHY version and its parameters. The parameters can describe supported services and transmission formats that are available. The parameters can also describe available resources, bandwidths and number of spatial streams. The parameters can describe power save support parameters, which can enable low power transmissions. For instance, an AP can support Target Wake Time (TWT) power save.

In some embodiments, the links can be located so closely (e.g., spatially and/or in frequency), that a non-AP STA may not be able to operate them independently (e.g., due to limits of the device and/or to manage resources or performance). APs can support STAs (e.g., non-AP MLDs) that are not capable of simultaneously transmitting and receiving on the link pair.

In some embodiments, the non-AP MLD can operate STAs communicating with multiple AP-MLDs. For example, a first STA can communicate with a first AP MLD and a second STA can communicate with a second AP MLD. Similarly, an AP MLD can communicate with multiple STAs. For example, one affiliated AP can communicate with multiple STAs.

In the illustrated example, the non-AP MLD operates a number of STAs equal to the number of APs provided by the AP MLD. However, different numbers are possible. For example, the AP MLD can provide more APs than the number of STAs operated by the non-AP MLD or vice versa. The number of APs and/or number of STAs can change over time.

According to some embodiments, it can be beneficial for client privacy enhanced (CPE) stations (STAs) (or clients) to change or adjust certain parameters used for performing communications with an AP. For example, eavesdroppers can seek to intercept, extract or listen in on communications between certain CPE STAs and APs. Accordingly, clients can seek to perform more secure communications between the CPE STAs and APs using various techniques involving address changing or related parameter adjustments.

For example, it can be beneficial for a CPE Client to change its own over-the-air (OTA) media access control (MAC) address used for communicating with an AP when reassociating from one CPE AP to another CPE AP. Additionally or alternatively, it can be beneficial for a CPE Client to initiate changing its own OTA MAC address used with a CPE AP in an associated state (e.g., STA State 4) without any loss of connection. In some embodiments, it can be beneficial for a CPE Client to initiate changing the OTA MAC addresses of all associated CPE Client's in the base station system (BSS) (e.g., those CPE Clients in associated STA State 4) simultaneously without any loss of connection. Furthermore, it can be beneficial for a CPE client and CPE AP to change the transmitted sequence number (SN), packet number (PN) and traffic identifier (TID) to an uncorrelated new value on downlink and uplink to new values in an associated STA State 4, without any loss of connection, according to some embodiments. Moreover, it can be further beneficial for a CPE Client and CPE AP to change the CPE Client's association identifier (AID) to an uncorrelated new value in an associated STA State 4, without any loss of connection.

### Channel Access in Wireless Networking Systems

Channel access delay can be considered as one of the main sources of latency and therefore can contribute significantly to cases involving low latency among STAs and APs. For example, STAs compete with other STAs (including APs) in the BSS (as well as OBSS) to gain channel access, according to some embodiments. Furthermore, UL trigger-based channel access relies on APs gaining access to the channel and on the AP scheduling the UL traffic. Accordingly and as one example, WLAN channel access can be especially inefficient when many users contend for short transmissions. In this scenario, the channel can be fragmented and collisions can occur. Furthermore, short TXOPs can result in inefficient use of the channel and long TXOPs can increase the delay for other users to access the channel, according to some embodiments.

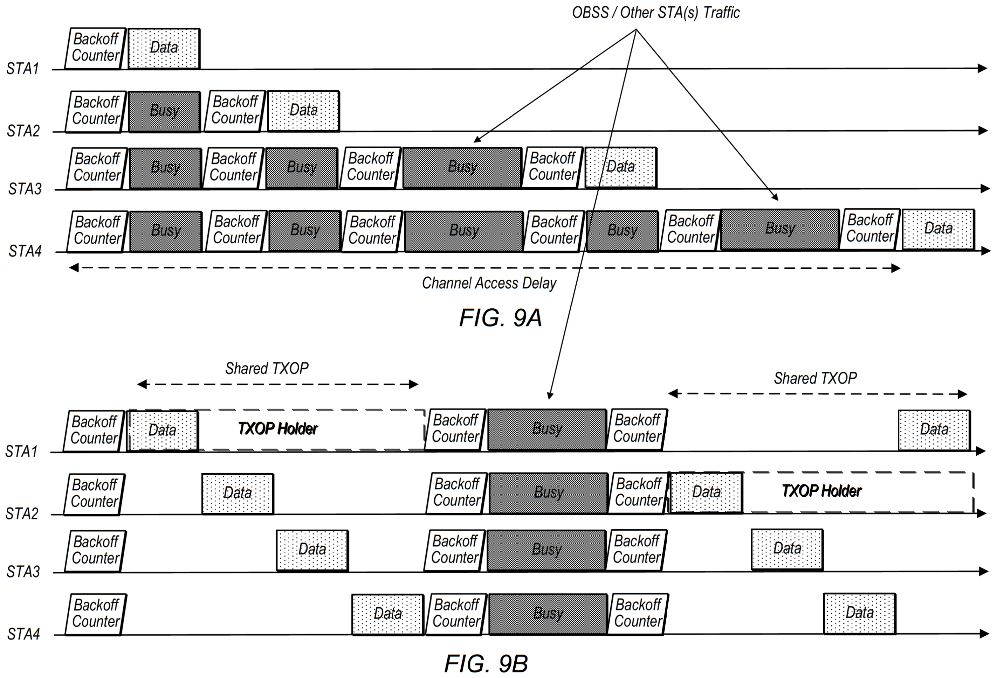

### Figures 9A-B - Channel Access Competition

Figures 9A-B illustrate example aspects of a channel access competition between devices, according to some embodiments. For example, Figure 9A illustrates a scenario involving uplink (UL) enhanced distributed channel access (EDCA) delays that can occur when a STA competes with other STAs in the same BSS, as well as due to AP and OBSS traffic. Figure 9A illustrates four STAs (STAs 1-4) attempting to access a channel in such an environment. Accordingly and as shown in Figure 9A, STA 1 can gain access to the channel after a backoff counter has expired and proceed to transmit data (e.g., UL data to an AP or P2P data to a STA). Accordingly, STAs 2-3 can be considered to be busy while STA 1 is transmitting said data, according to some embodiments. Next, STA2 can gain access to the channel and transmit its data. However, STA 3 and STA 4 can experience additional and longer periods in which the medium is busy (e.g., STA 3 and STA 4 may not be able to transmit) due to OBSS traffic and other STAs' (e.g., different than STAs 1-4) traffic in the channel, which ultimately results in a longer channel access delay. Furthermore, in such a congested environment, the probability of accessing the channel decreases as the number of STAs increases, according to some embodiments.

Figure 9B illustrates a scenario involving UL TXOP sharing and delays that can occur when a STA competes with other STAs in the same BSS, as well as due to AP and OBSS traffic. For example, Figure 9B illustrates four STAs (STAs 1-4) that can form a group, e.g., STAs from the same or similar manufacturer or having similar capabilities, and can further coordinate with each other with respect to channel access. Accordingly, once a STA accesses the channel (e.g., STA 1 in Figure 9B), it can be the TXOP holder and share the TXOP with any/all of the other STAs in the same group (e.g., any of STAs 2-4). Accordingly, after each STA transmission, the TXOP can be shared with the next STA in the group. Additionally, the group of STAs can experience additional and longer periods during which they are busy, e.g., due to OBSS traffic and other STAs' (e.g., different from STAs 1-4) traffic in the channel. Furthermore, after another round of contention and/or a backoff counter countdown has concluded (e.g., expiry of a backoff counter), STA 2 can be the first to gain access to the channel (e.g., be the TXOP holder) and can subsequently share the TXOP with STAs 3, 4, and 1, respectively. In other implementations, other orders of sharing can be used. Figure 9B illustrates that the probability of accessing the channel increases as the number of the STAs in the coordination group increases. However, the TXOP durations shared in the STA group can decrease as the number of STAs in the coordination group increases, according to some embodiments.

In some instances, multiple STAs can need to regularly transmit small amounts of traffic. For example, multiple STAs can contend to share a TXOP. In infra-UL boosting, multiple STAs can contend in order to increase the probability of accessing the channel, according to some embodiments. Additionally, example P2P communications can include periodic access to the channel with a high cadence, e.g., in order to transmit small amounts of data, according to some embodiments. Moreover, multiple STAs can contend on behalf of one or more other STAs, according to some embodiments. Alternatively, some STAs can contend for the channel in order to help one or more other STAs boost their traffic.

According to some embodiments, contending devices (e.g., devices performing contention related procedures/operations) negotiate access to the channel to avoid interfering with each other. For example, some devices can use a probability-based method in which STAs can select a random timer value and wait until it expires before transmitting a frame. If a collision occurs, the contention window size can be increased (e.g., doubled) to reduce the chance of another collision, according to some embodiments. Once the contention phase has been resolved and/or a backoff counter countdown has concluded (e.g., expiry of a backoff counter), a STA can perform an association procedure in which a STA requests to join a basic service set (BSS) and is assigned an association ID (AID) by an access point (AP) or peer STA, according to some embodiments. The STA can then send its capabilities to the AP/peer STA, which can include one or more capabilities the AP/peer STA has advertised. The AP/peer STA can then respond with an association response frame that includes the STA's AID, according to some embodiments.

### Methods for Enhanced Low Latency Transmissions in 802.11

According to some embodiments, STAs can coordinate with one or more other STAs or APs to gain channel access (against OBSS STAs and non-cooperating STAs) to perform transmission/reception in a channel. For example, these devices can coordinate with each other to achieve lower channel access delays in addition to more efficiently coordinating the distribution of TXOP resources with the other STAs. Furthermore, when one STA is able to access the channel, the STA (or the AP) can possibly assist other STAs such that they can transmit data (e.g., low latency (LL) data) at opportunistic times within the transmission opportunity (TXOP) holder's TXOP, according to some embodiments. Therefore, it can be beneficial to describe mechanisms for opportunistically transmitting low latency data during the TXOPs of a peer STA (e.g., an associated STA or a peer-to-peer (P2P) STA).

For example and according to some embodiments, a STA can request that a peer STA share a TXOP, e.g., when the requesting STA has LL data to be transmitted during the peer STA's TXOP. In some implementations, the request can be signaled by including an LL indication in an initial control response (ICR) frame. The peer STA can send an initial control frame (ICF) to one or more other STAs around the start of a TXOP. In response to the ICF, the STA requesting to share the TXOP can include the LL indication in the ICR frame (e.g., a multi-STA block acknowledgement (BA) frame as one example) sent to the peer STA that holds the TXOP. According to some embodiments, the LL indication can be included in the ICR frame.

Further, one or more non-AP STAs can use multi-STA BA frames for single-traffic identifier (TID) single-STA aggregate MAC protocol data units (A-MPDUs). After an LL indication (LLI) is received, the TXOP owner (e.g., peer STA) can operate according to a Reverse Direction (RD) procedure or a Trigger TXOP sharing (TXS) procedure, according to some embodiments. After an LL session has been enabled between the requesting STA and the TXOP holder, one or more attributes or parameters associated with the LL session can be exchanged between the cooperating STAs (e.g., between two non-AP STAs (P2P scenario), or between one AP STA and one non-AP STA). According to some embodiments, LL session attributes can include any/all of "LL Session enable/disable", "Max PPDU duration", "Max Low Latency session lifetime", and "Max ICR frame duration", which can be applicable in the scenario in which a STA can also carry coexistence unavailability information.

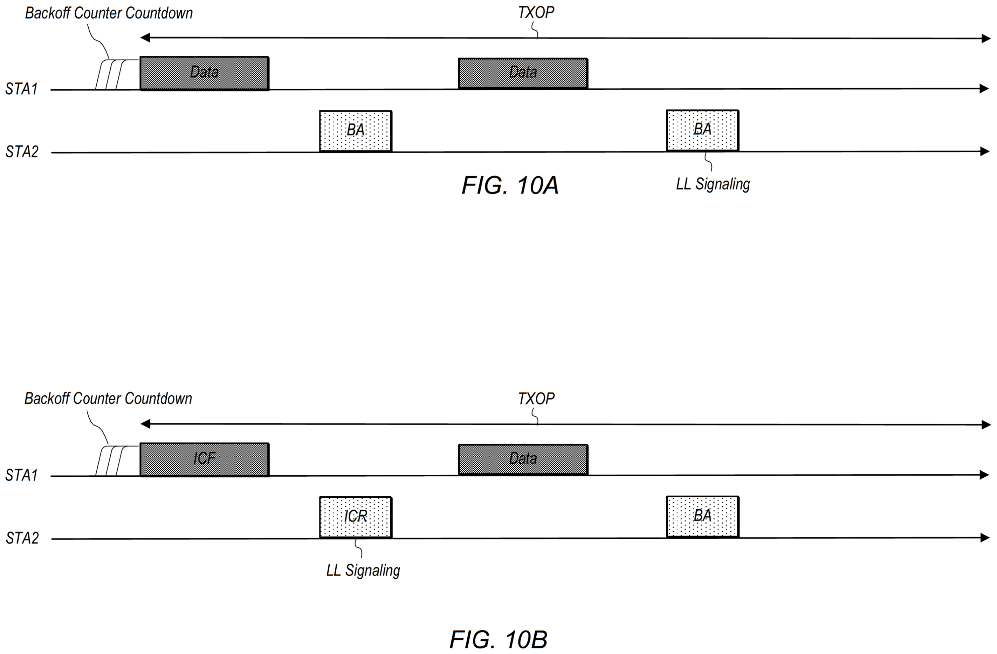

### Figures 10A-B - Example Low Latency Signaling in a Transmission Opportunity

Figures 10A-B illustrates example low latency (LL) signaling in a transmission opportunity (TXOP), according to some embodiments. For example, Figure 10A illustrates that after a round of contention and expiry of a backoff counter, STA1 (e.g., station 1) can gain access to the channel (e.g., be the TXOP holder) and transmit data to STA2 (e.g., station 2). STA1 can then receive a block acknowledgement (BA) frame and further transmit additional data to STA 2. Accordingly, if STA 2 has low latency data to transmit, STA2 can transmit a BA that includes LL signaling. Thus, during the TXOP of STA1, the TXOP-responder (e.g., STA2) can send a LL indication or request to the TXOP-owner (STA1), according to some embodiments.

In some embodiments, the LL request signaling can be included in a control response frame (CRF), such as a BA frame. Alternatively, the LL request signaling can be included in an initial control response (ICR) frame, such as a multi-STA block acknowledgement (M-BA) frame, according to some embodiments.

Furthermore, the LL request signal can indicate various information to the TXOP holder, according to some embodiments. For example, the LL request signal can indicate a request to transmit data to the TXOP-holder, a request to transmit to or exchange data with one or more STA(s) other than the TXOP-holder, and/or a request to opt out of the TXOP, according to some embodiments. Additionally or alternatively, during a LL session between a STA and the TXOP holder, the AP or non-AP STA TXOP-owners can keep the PPDU duration at less than a specified duration, according to some embodiments.

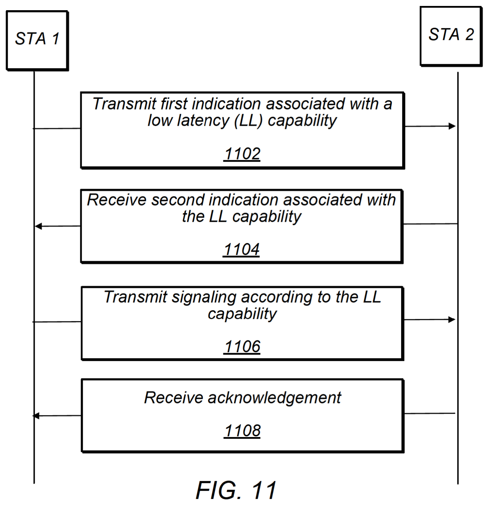

### Figure 11 - Example Method of Enhanced Low Latency Transmissions

Figure 11 is a communication flow diagram illustrating an example method of enhanced low latency transmissions, according to some embodiments. Figure 11 illustrates an embodiment directed toward systems, methods, and mechanisms for non-APs and APs to coordinate with other non-APs for more efficient use of transmission opportunities (TXOPs) for low latency transmissions. Such techniques can aid in providing more efficient communications, reduced latency, and/or reduced power consumption.

Aspects of the method of Figure 11 can be implemented by a non-AP (e.g., STA, STA MLD, or non-AP MLD) in communication with another non-AP (e.g., STA, STA MLD, or non-AP MLD) and/or another AP MLD (or non-MLD AP). The AP and/or non-AP can be as illustrated in and described with respect to various ones of the Figures herein, or more generally in conjunction with any of the computer circuitry, systems, devices, elements, or components shown in the above Figures, among others, as desired. For example, a processor (and/or other hardware) of such a device can be configured to cause the device to perform any combination of the illustrated method elements and/or other method elements. For example, one or more processors (or processing elements) (e.g., processor(s) 101, 204, 302, 402, 432, 434, 439, baseband processor(s), processor(s) associated with communication circuitry such as 130, 230, 232, 329, 330, 430, etc., among various possibilities) can cause a wireless device, STA, UE, non-AP, and/or AP, or other device to perform such method elements.

Note that while at least some elements of the method of Figure 11 are described in a manner relating to the use of communication techniques and/or features associated with IEEE (e.g., 802.11me) and/or 802.11 (e.g., 802.11be or 802.11bn) specification documents, such description is not intended to be limiting to the disclosure, and aspects of the method of Figure 11 can be used in any suitable wireless communication system, as desired. Similarly, while elements of the method of Figure 11 are described in a manner relating to non-APs that can possibly not be MLDs, such description is not intended to be limiting to the disclosure, and aspects of the method of Figure 11 can be used by non-APs that are MLDs, as desired.

The methods shown can be used in conjunction with any of the systems, methods, or devices shown in the Figures, among other devices. In various embodiments, some of the method elements shown can be performed concurrently, in a different order than shown, or can be omitted. Additional method elements can also be performed as desired. As shown, this method can operate as follows.

At 1102, STA1 can transmit, to STA2, a first indication associated with a low latency (LL) capability, according to some embodiments. In other words, a method of a first station (STA) can include, transmitting, to a second STA, first signaling comprising a first indication associated with at least one of a LL capability and/or LL signaling. In some embodiments, the first indication can be a LL indicator set to a non-zero value. In some embodiments, the first signaling can be included in one of a control response frame (CRF), a block acknowledgement (BA) frame, an initial control response (ICR) frame, or a multi-STA BA (M-BA) frame. However, in other embodiments, other signaling can be used. According to some embodiments, the method can include receiving, prior to the first signaling, initial signaling comprising an initial control frame (ICF).

At 1104, STA1 can receive, from STA2, a second indication associated with LL capability, according to some embodiments. For example, a first STA can receive, from the second STA, second signaling comprising a second indication. In some embodiments, the second indication can be a reverse direction (RD) indicator set to a non-zero value. According to some embodiments, the second signaling can be included in one of a data frame, a quality of service (QoS) null frame, a clear to send (CTS) frame, or a transmission sharing (TXS) frame. In other embodiments, other signaling can be used.

At 1106, STA1 can transmit, to STA2, signaling according to the LL capability, according to some embodiments. The first STA can perform operations that include transmitting, to the second STA and based at least in part on the second indication, third signaling in accordance with the LL capability.

At 1108, STA1 can receive, from STA2, an acknowledgement, according to some embodiments. For example, having received the third signaling at 1106, STA2 can transmit a BA to STA1 to indicate that it successfully received the third signaling. According to some embodiments, the third signaling can include a RD indicator set to the non-zero value of the second indicator.

In some embodiments, the method can further include transmitting, to the second STA, additional signaling comprising an additional indication. Additionally or alternatively, the additional indication can include an other RD indicator set to a value of zero, according to some embodiments.

Additionally, the method can include exchanging, as part of a LL session with the second STA, one or more parameters associated with the LL session, according to some embodiments. Furthermore, the method can include disabling, at a time associated with a parameter of the one or more parameters, the LL session. According to some embodiments, the method can include receiving, prior to the first signaling, initial signaling comprising an initial control frame (ICF).

According to other embodiments related to Figure 11, a method by a first station STA can include transmitting initial signaling to a second STA and receiving, from the second STA, first signaling comprising a first indication associated with at least one of a LL capability and/or LL signaling. The method can also include transmitting, to the second STA, second signaling comprising a second indication and receiving, from the second STA and based at least in part on the second indication, third signaling in accordance with the LL capability. The method can also include transmitting, to the second STA, acknowledgement signaling in response to the third signaling.

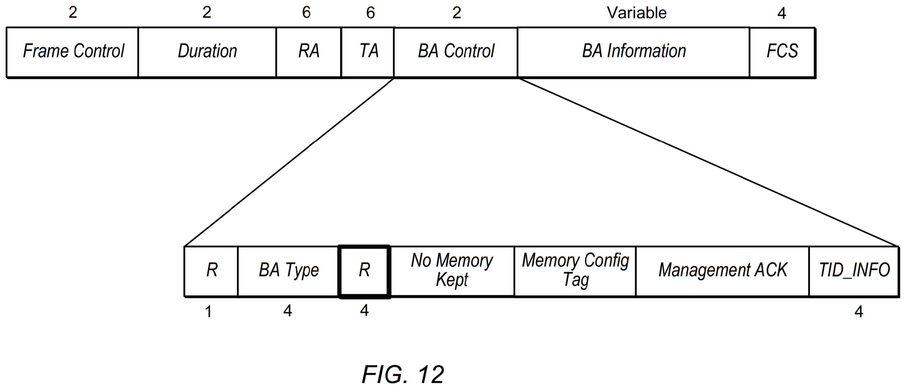

### Figures 12 - Example Control Response Frame (CRF) Formats for LL Signaling

Figure 12 illustrates an example of CRF frame formats for LL signaling, according to some embodiments. For example, a CRF frame can include various fields, such as any/all of a 2-byte frame control field, a 2-byte duration field, a 6-byte receiver address (RA) field, a 6- byte transmitter address (TA) field, a 2-byte BA Control field, a variable byte BA Information field, and a 4-byte frame checksum (FCS) field, according to some embodiments. Furthermore, the BA control field can include any/all of a 1-bit reserved subfield, a 4-bit BA type subfield, a 4-bit reserved subfield, a 4-bit TID_INFO subfield, as well as "No Memory Kept", "Memory Configuration Tag", and "Management ACK" subfields. In some current implementations, there are 5 reserved bits in the BA Control reserved subfields, so it can be possible to include the LL indication signaling using the 4-bit reserved subfield (outlined in bold in Figure 12) of the BA Control field, according to some embodiments. Other configurations are possible based on the number of bits utilized in various fields.

In some embodiments, a STA can possibly include LL indication signaling in a M-BA (rather than a BA). For example, currently M-BAs can be used for acknowledging MPDUs that are included in multi-TID single-STA A-MPDUs, according to some embodiments. However, it can also be beneficial to allow the use of M-BA frames for single-TID A-MPDUs, according to some embodiments. Including an LL signaling indication in an M-BA, regardless of whether the M-BA is acting as a control response frame (e.g., a BA to an A-MPDU) or as ICR (as a response to an ICF), can allow for greater flexibility in achieving more efficient LL transmissions during TXOPs, according to some embodiments. Accordingly, as the 4-bits in TID_INFO subfield in the BA Control field are reserved, 2-3 bits of the 4 bits can be used to include the LL request indication, according to some embodiments.

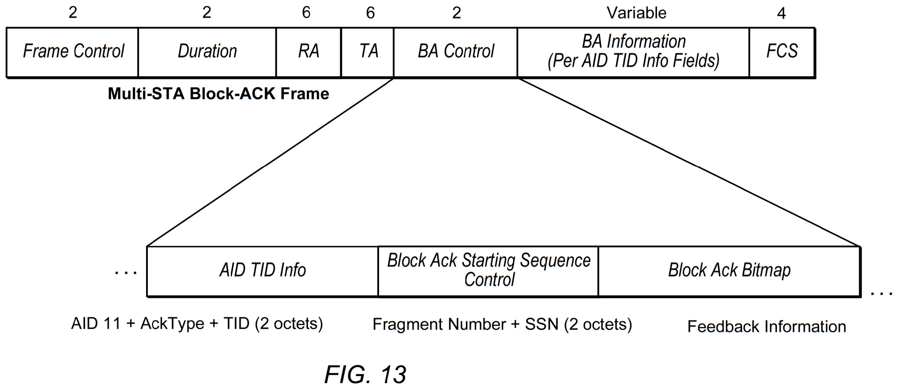

### Figure 13 - Example Initial Control Response (ICR) Frame Formats for LL Signaling

Figure 13 illustrates an example of ICR frame formats for LL Signaling, according to some embodiments. For example, an ICR frame, such as a M-BA, can include various fields, such as any/all of a 2-byte frame control field, a 2-byte duration field, a 6-byte receiver address (RA) field, a 6- byte transmitter address (TA) field, a 2-byte BA Control field, variable byte BA Information fields per AID TID (e.g., includes BA Information fields for each AID TID), and a 4-byte frame checksum (FCS) field, according to some embodiments. Furthermore, the BA Information (Per AID TID Info) field can further include any/all of a new "AID TID Info" subfield, a BA Starting Sequence Control subfield, and a BA Bitmap subfield, which can specify feedback type and content per AID TID, according to some embodiments. Additionally, the new "AID TID Info" subfield can be utilized to include LL signaling by using a reserved combination of the Ack Type and TID for the LL request. For example, the new "AID TID Info" subfield can utilize 2 octets to specify the AID (e.g., AID11), an acknowledgement (ACK) type (e.g., AckType=0), and a TID (e.g., a value from 8-13) to indicate the LL signaling, according to some embodiments. Additionally or alternatively, the 2-octet Starting Sequence Control subfield can be repurposed to carry the LL request and/or attributes, according to some embodiments. Furthermore, the length of the Block Ack Bitmap subfield can be indicated in the Starting Sequence Control subfield or can be set (potentially as a default value) to zero if all LL attributes can be included in the Starting Sequence Control subfield, according to some embodiments. Additionally or alternatively, the BA Starting Sequence Control subfield can utilize 2 octets to specify a fragment number and a starting sequence number (SSN) and feedback information, according to some embodiments

In some embodiments, the LL signaling can be present during a LL session regardless of whether the STA has received a request for LL transmission. In other words, the LL request either indicates no-request (e.g., by indicating/including a value equal to zero) or indicates a request to transmit to the TXOP-owner such as reverse direction (e.g., a value equal to 1) or a request to transmit to a STA other than the TXOP-owner (e.g., a value equal to 2), according to some embodiments. As a result, the provided feedback is a fixed-size feedback of a length known to the receiving STA.

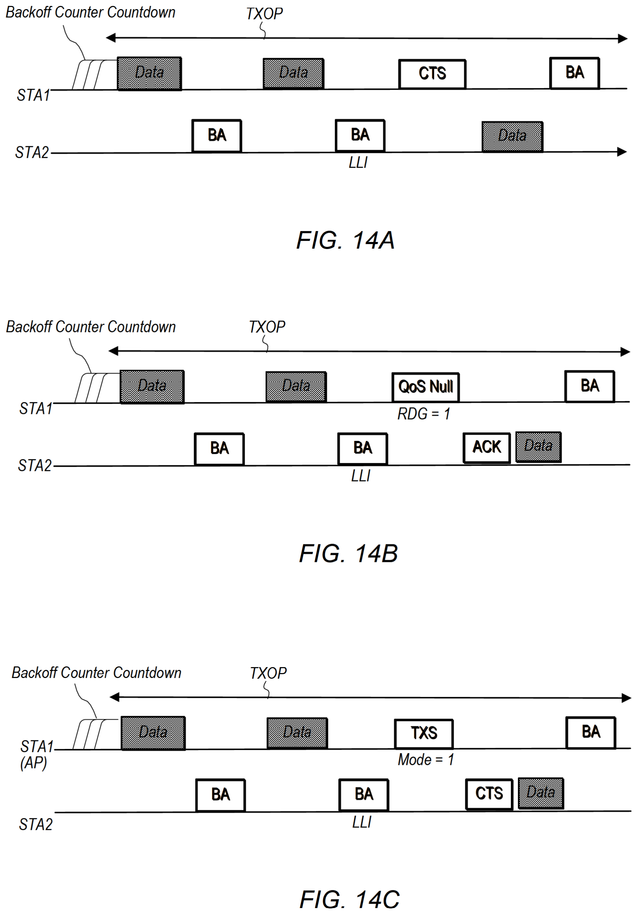

### Figures 14A-C - Example Scenarios of LL Signaling in CRFs

Figures 14A-C illustrate example scenarios for LL signaling in CRFs and the different types of responses that can occur in uplink (UL) and/or downlink (DL), according to some embodiments. For example, and according to some embodiments, a STA can make a MAC layer decision regarding whether to act on LL signaling in CRF or ICR. For example, upon receiving LL signaling, a TXOP-owner can react (e.g., respond to the requesting STA) in the next or subsequent PPDUs, according to some embodiments. Furthermore, the response type can be determined based on the indicated request (e.g., indicated by the LL signaling). In other words, the response type can depend on what type of TXOP-sharing is being requested and/or will be used.

As one example scenario, Figure 14A illustrates two STAs (STA1 and STA2) that exchange signaling after STA1 has successfully contended to access the channel and transmit data to STA2. STA1 can receive a BA from STA2 and transmit additional data to STA2. In some embodiments, STA2 can have low latency data to transmit and therefore additionally include a LL indicator (LLI), e.g., in a BA or in a Multi-STA BA (M-BA) transmitted to STA1. For example, STA2 can utilize one or more bits according to the CRF formats of Figure 12 to include LL information (e.g., LLI(s)) in the BA/M-BA transmitted to STA1, according to some embodiments. Accordingly, STA1 can respond (at some subsequent time in the TXOP) by transmitting a CTS frame to STA2. Having received the CTS from STA1, STA2 can transmit its LL data to STA 1 and receive a BA from STA1, according to some embodiments. Figure 14A illustrates an example scenario in which a TXOP-initiator can respond via a control response frame (e.g., a clear to send (CTS) frame). The TXOP-holder can transmit, during the same TXOP, a CTS frame addressed to one of the TXOP-responders that has set the LL indication to a non-zero value in at least one of the previous BA or M-BA frames during the same TXOP, according to some embodiments.

As one alternative and as illustrated in Figure 14B, instead of sending a CTS as in Figure 14A, STA1 could alternatively send STA2 a QoS Null frame with a RDG value set to a non-zero value (e.g., 1). STA2 would then transmit an ACK frame followed by LL data and subsequently receive a BA from STA1, according to some embodiments. Figure 14B illustrates an example scenario related to a reverse direction (RD) protocol in which the TXOP-initiator can respond by setting a reverse direction grant (RDG)/More PPDU bit in a subsequent quality of service (QoS) Null data frame to a non-zero value, according to some embodiments. Accordingly, the TXOP-holder can transmit a data frame, in the same TXOP and with a RDG bit set to a value of 1, addressed to one of the TXOP-responders that have set the LL indication to a non-zero value in at least one of the previously received BA or M-BA frames in the same TXOP, according to some embodiments.

As another alternative illustrated in Figure 14C, instead of sending a CTS or QoS Null frame (as in Figures 14A and 14B), STA1 could send STA2 a transmission sharing (TXS) frame (with a mode value set to 1). STA2 could then transmit a CTS frame followed by LL data and subsequently receive a BA from STA1, according to some embodiments. In such scenarios, STA1 can be an AP and STA2 can be a non-AP STA that is seeking to transmit LL UL data to the TXOP-owner STA1, according to some embodiments. As such, Figure 14C illustrates another alternative related to a TXS trigger protocol, in which a TXOP-initiator can respond with TXS trigger frame, according to some embodiments.

In some embodiments, any/all of the scenarios illustrated in Figures 14A-C can occur in UL or DL. For example, STA1 can be a STA or AP that shares its DL TXOP with one or more LL requesting STAs. Additionally or alternatively, STA2 can also request (from STA1, the TXOP holder) to transmit LL data to a P2P STA, according to some embodiments. Furthermore and according to some embodiments, STA1 can be a non-AP STA and STA2 can be an AP, in a scenario in which the AP seeks to transmit LL DL data to the TXOP-owner STA1. However, in the scenario in which a non-AP STA is the TXOP-owner, a non-AP STA can possibly not be able to transmit a trigger frame (TF), such as a TXS frame, according to some embodiments.

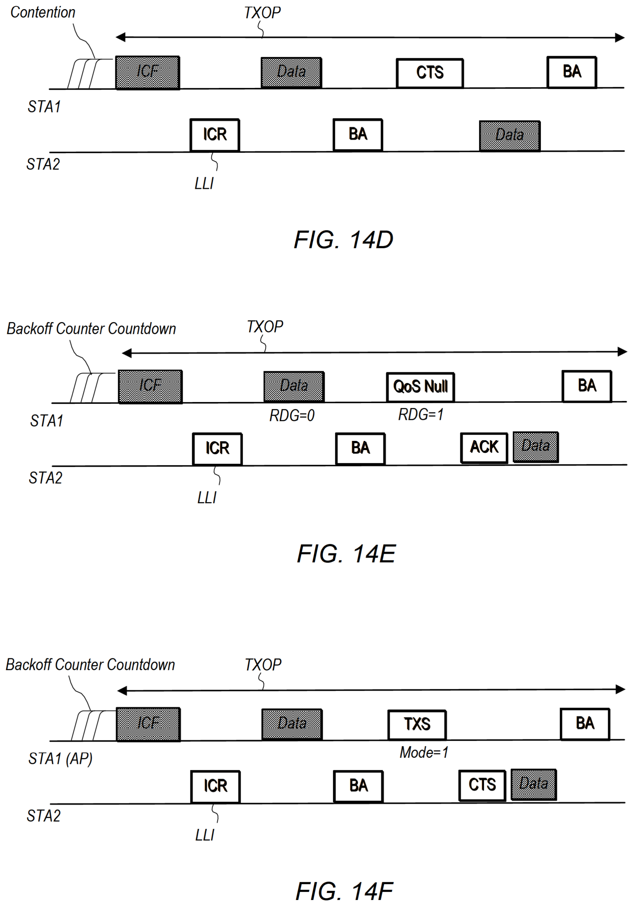

### Figures 14D-F - Example Scenarios of LL Signaling in ICRs

Figures 14D-F illustrate example scenarios for LL signaling in ICRs and the different types of responses that can occur in uplink (UL) or downlink (DL), according to some embodiments.

As one example scenario, Figure 14D illustrates two STAs (STA1 and STA2) that exchange signaling after STA1 has successfully contended to access the channel and transmit an ICF to STA2. In some embodiments, STA2 can have low latency data to transmit and therefore additionally include a LL indicator (LLI) in a ICR frame transmitted to STA1. For example, STA2 can utilize bits according to the ICR formats of Figure 13 to include LL information (e.g., LLI(s)) in the ICR transmitted to STA1, according to some embodiments. STA1 can then transmit additional data to STA2 and receive a BA. STA1 can continue to transmit data to STA2 and receive respective BAs before, at some subsequent time in the TXOP, transmitting a CTS frame to STA2. Having received the CTS from STA1, STA2 can proceed to transmit its LL data to STA 1 and subsequently receive a BA from STA1, according to some embodiments.

As one alternative and as illustrated in Figure 14E, having received the LLI in the ICR from STA2, STA1 can transmit additional data (with a RDG value set to 0 indicating that STA2 should not transmit its LL data at that time) to STA2 and subsequently receive a BA from STA2. Alternatively, instead of sending a CTS as in Figure 14D, STA1 can send a QoS Null frame with a RDG value set to a non-zero value (e.g., 1) to STA2 to indicate that STA2 can proceed to transmit its LL data in the TXOP. STA2 can then transmit an ACK frame followed by LL data and subsequently receive a BA from STA1, according to some embodiments.

As another alternative illustrated in Figure 14F, instead of sending a CTS or QoS Null frame, as in Figures 14D and 14E, STA1 could optionally send a TXS frame (with a mode value set to 1) to STA2. STA2 could then transmit a CTS frame followed by LL data and subsequently receive a BA from STA1, according to some embodiments. In such scenarios, STA1 can be an AP and STA2 can be a non-AP STA that is seeking to transmit LL UL data to the TXOP-owner STA1, according to some embodiments.

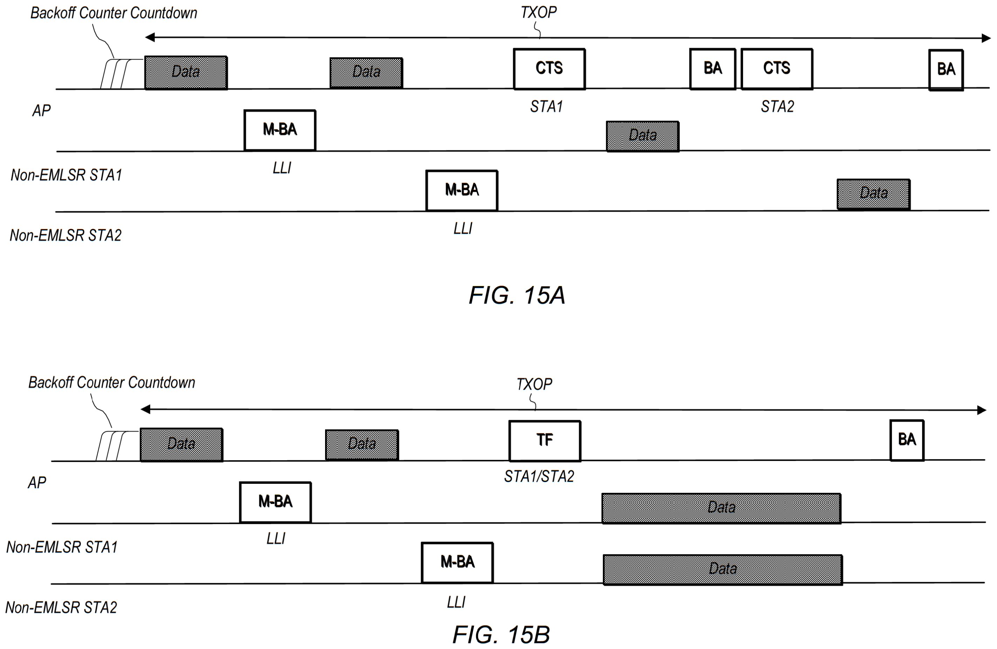

### Figures 15A-B - Example Scenarios of LL Signaling for Non-Enhanced Multi-Link Single Radio (non-EMLSR) STAs

Figures 15A-B illustrate example scenarios for LL Signaling for non-EMLSR STAs, according to some embodiments. For example, it can be possible that, during a TXOP, multiple TXOP-responders (such as non-EMLSR STAs) send LL indications to an AP. Accordingly, it can be beneficial to describe what type of action the AP can take in responding to the multiple LL indications (e.g., requests). For example, Figure 15A illustrates an AP exchanging signaling with two non-EMLSR STAs (e.g., non-EMLSR STA1 and non-EMLSR STA2). After the contention process has concluded (e.g., expiry of a backoff timer), the AP can transmit data to non-EMLSR STA1 and receive a M-BA including an LLI from non-EMLSR STA1 in response. Additionally, the AP can transmit additional data to non-EMLSR STA2 and subsequently receive a M-BA including an LLI from non-EMLSR STA2, according to some embodiments. As one possibility in this scenario, the AP can respond to requesting TXOP-responders based on a priority of the non-EMLSR STAs, according to some embodiments. Additionally or alternatively, the AP can respond to the requesting TXOP-responders sequentially in the order in which the M-BAs were received. For example and as shown in Figure 15A, the AP can respond to the LL request (e.g., the BA or M-BA with an LLI) from non-EMLSR STA1 first by transmitting a CTS frame addressed to non-EMLSR STA1, receiving low latency data from non-EMLSR STA1, and subsequently transmitting a BA to non-EMLSR STA1, according to some embodiments.. Then, the AP can transmit a CTS addressed to non-EMLSR STA2, receive low latency data from non-EMLSR STA2, and subsequently transmit a BA to non-EMLSR STA2, according to some embodiments.

Alternatively, as illustrated in Figure 15B, if the LL request from the TXOP-responders (e.g., the non-EMLSR STAs 1 and 2) is to transmit in UL, the AP can send a trigger frame (e.g., TF) addressed to one or more of the requesting TXOP-responders. For example and as similarly illustrated in Figure 15A, the AP can transmit data to non-EMLSR STA1 and receive a M-BA including an LLI from non-EMLSR STA1 in response. Further, the AP can transmit additional data to non-EMLSR STA2 and subsequently receive a M-BA including an LLI from non-EMLSR STA2, according to some embodiments. Accordingly, the AP can transmit a trigger frame addressed to both non-EMLSR STA1 and non-EMLSR STA2, and subsequently receive low latency data from both non-EMLSR STAs, according to some embodiments. Furthermore, the AP can embed or include a buffer status report poll (BSRP) in the TF in order to request a buffer status report (BSR) from the non-EMLSR STAs, according to some embodiments.

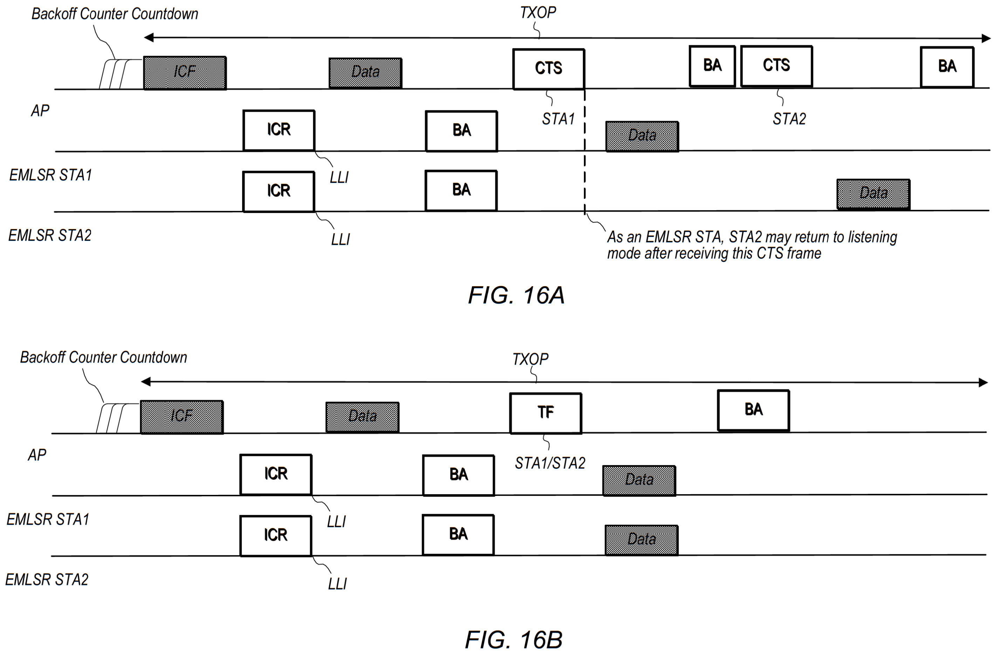

### Figures 16A-B - Example Scenarios of LL Signaling for EMLSR STAs

Figures 16A-B illustrate example scenarios of LL Signaling for EMLSR STAs, according to some embodiments. For example, it can be possible that, during a DL TXOP, multiple TXOP-responders (such as EMLSR STAs) can send LL indications to an AP. Accordingly, it can be beneficial to describe what type of action the AP can take in responding to the LL requests. For example, given the duration of the TXOP, the AP can only be able to serve one (e.g., the first) LL request, according to some embodiments. Alternatively and according to other embodiments, the AP can serve multiple LL-requesting STAs, e.g., within a sufficiently long TXOP duration. For example, the AP can respond to only one of the LL-requesting TXOP-responders (e.g., EMLSR STAs) or the AP can trigger multiple EMLSR STAs in addition to potentially requesting BSR from the EMLSR STAs.

Figure 16A illustrates an AP exchanging signaling with two EMLSR STAs (e.g., EMLSR STA1 and EMLSR STA2). After the contention process has concluded (e.g., expiry of a backoff timer), the AP can transmit an ICF frame to EMLSR STA1 and receive ICR frames including respective LLIs from EMLSR STA1 and EMLSR STA2 in response. Further, the AP can transmit additional data to one or more of the EMLSR STAs and subsequently receive respective BAs from them, according to some embodiments. As one possibility in this scenario, the AP can respond to the LL requests (e.g., the ICRs with an LLI) sequentially. For example, the AP can respond to the LL request from EMLSR STA1 first by transmitting a CTS frame addressed to EMLSR STA1. In some embodiments, EMSLR STA2 can return to a listening mode after receiving this CTS frame addressed to EMSLR STA1. Furthermore, the AP can receive low latency data from EMLSR STA1, and subsequently transmit a BA to EMLSR STA1, according to some embodiments. Then, the AP can transmit a CTS addressed to EMLSR STA2, receive low latency data from EMLSR STA2, and subsequently transmit a BA to EMLSR STA2, according to some embodiments. Furthermore and according to some embodiments, if the LL requests are a mix of UL and P2P transmission, it can be beneficial to first (for better coexistence with legacy devices) respond to the LL request for UL data transmission and then respond to the LL request for P2P transmission.

As another alternative illustrated in Figure 16B, the AP can respond to the LL requests (e.g., the ICRs with an LLI) with a trigger frame (TF), according to some embodiments. In other words, if the AP receives LLI from multiple EMLSR STAs, it can have to option to trigger all LL-requesting STAs at once. For example, the AP can respond to both the LL requests from EMLSR STA1 and EMLSR STA2 (in their respective ICRs) by transmitting a TF in the TXOP addressed to EMLSR STA1 and EMLSR STA2. The EMLSR STAs can then respond by transmitting their LL data and further receiving a BA from the AP, according to some embodiments.

According to some embodiments related to Figures 15-16, a method performed by an AP can include receiving, from one or more respective station STAs, respective first signaling comprising one or more first indications associated with at least one of a LL capability and/or LL signaling. Additionally, the method can include transmitting, to the one or more respective STAs, respective second signaling comprising one or more second indications and receiving, from the one or more respective STAs, respective third signaling in accordance with the LL capability. The method can also include transmitting, to the one or more respective STAs, acknowledgment signaling in response to the third signaling, according to some embodiments.

In some embodiments, the one or more respective STAs can be non-enhanced multi-link single radio (non-EMLSR) STAs. Additionally or alternatively, the respective second signaling can be transmitted in one or more clear to send (CTS) frames that can be transmitted sequentially to the one or more respective STAs in an order corresponding to an order in which the one or more first indications were received or in a trigger frame (TF) transmitted to the one or more respective STAs, according to some embodiments.

According to other embodiments, the one or more respective STAs can be enhanced multi-link single radio (EMLSR) STAs and the respective second signaling can be transmitted in a CTS frame which indicates for at least one of the EMLSR STAs to transition to a listening mode.

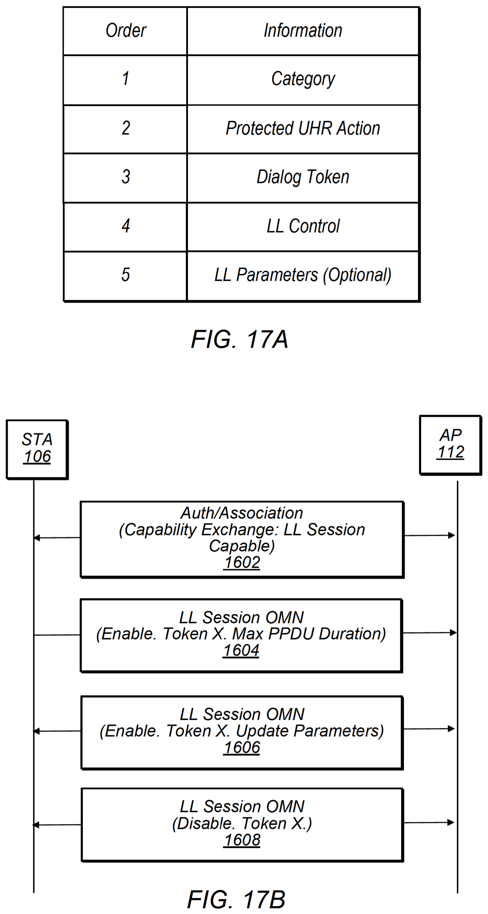

### Figures 17A-B - Example Low Latency Session Attributes and Enablement

Figures 17A-B illustrate example aspects of LL session attributes and enablement, according to some embodiments. For example, Figure 17A illustrates an example PPDU including information such as any/all of category, protected ultra-high reliability (UHR) action, dialog token, LL Control, and LL Parameters and their respective orders 1-5, according to some embodiments. For example, the LL Control information can be represented by 1 octet, which can include 1 bit to indicate enablement/disablement of the LL session, 1 bit to indicate a maximum PPDU duration, 1 bit to indicate a maximum LL session lifetime, 2 bits to indicate a maximum ICR frame duration, and 3 reserved bits, according to some embodiments. In other embodiments, other values and/or other bit lengths can be used. Additionally, the LL parameters information can be of variable length and can use 1 octet to indicate a maximum PPDU duration and 1 octet to indicate a maximum low latency session lifetime, according to some embodiments. For example, if the maximum LL session lifetime indication is present, the LL session can automatically expire after the lifetime or the AP can send a LL session operating mode notification (OMN) signal to disable the LL session, according to some embodiments. Furthermore, in order to reduce overhead due to frequent short PPDUs, PPDUs can be shortened after receiving a LL Request indication, according to some embodiments. Additionally or alternatively, given the required time for the TXOP-owner, the PPDU shortening can need to be known by the TXOP-owner before the start of the TXOP, according to some embodiments.

Figure 17B illustrates an example operating mode notification (OMN) framework for LL session enablement/disablement, according to some embodiments. For example, a STA can communicate with an AP and exchange authentication and association information including an indication of LL capability, such that a LL session can be established, according to some embodiments. Accordingly and as part of the OMN framework to enable the LL session, the STA can transmit signaling including information associated with a Dialog Token and a maximum PPDU duration, according to some embodiments. Furthermore, the STA can transmit additional signaling associated with the dialog token and provide update information for the LL parameters, according to some embodiments. Lastly, if the maximum LL session lifetime indication is present in the information, the STA can send a LL session OMN signal associated with the dialog token to disable the LL session, according to some embodiments.

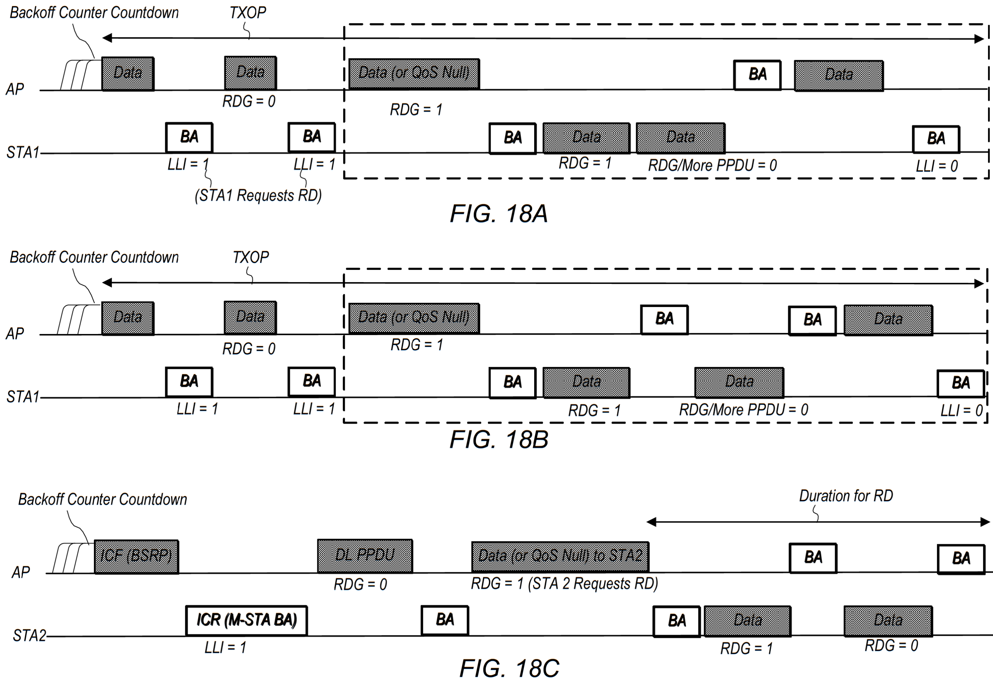

### Figures 18A-C - Enhanced Reverse Direction (RD) Protocol Examples

Figures 18A-C illustrate examples of enhanced RD protocols, according to some embodiments. For example, these RD protocols can allow a TXOP-responder to send LLIs (e.g., in a BA or M-BA) to the TXOP-owner to request LL data transmissions. Accordingly, when the TXOP-owner decides to grant the LL transmission using a RD protocol, it can set RDG=1 to indicate a RDG in a data or a QoS Null frame, according to some embodiments. According to some embodiments, the RDG field can be set to the same value in all MPDUs that are included in a frame. In some embodiments, the TXOP-owner can set the RDG value in a frame immediately after receiving the LLI or it can do so in subsequent frames. These example RD protocols illustrated in Figures 18A-C can allow intermediate responses from the RD initiator until the end of RD (e.g., when RD Responder sets RDG/More PPDU=0), according to some embodiments.

For example, Figure 18A illustrates an AP communicating with STA1 and, after successfully contending for the channel, transmitting data to STA1. STA1 can then reply with a BA including a LLI set to a value of 1 to indicate it has LL UL data to transmit to the AP. However, the AP can decide to transmit additional data to STA1 with a RDG value set to zero to indicate that RD has not been granted (e.g., that STA1 should not transmit its LL data in the TXOP at that time). STA1 can reply to the AP with another BA including the LLI value set to 1, according to some embodiments. At some time during the TXOP, the AP can determine to grant the RD protocol such that STA1 can transmit its LL UL data. Accordingly, the AP can send a data or QoS Null frame to STA1 that includes a RDG value set to 1. STA1 can reply to the AP using a BA and further transmit its LL data including a RDG value set to 1 and, for the last PPDU(s) of the LL data, set a RDG/More PPDU value equal to 0 to indicate that no more LL data will be transmitted. The AP can then transmit a BA and additional data to STA 1 and STA1 can respond with a BA including LLI set to a value of zero to indicate that it has no additional LL data to transmit, according to some embodiments. Figure 18B illustrates a similar example scenario to that of Figure 18A, but additionally includes a BA being transmitted from the AP to the STA in response to receiving the LL UL data with a RDG value equal to 1 from STA1, according to some embodiments.

Figure 18C illustrates an AP communicating with a STA (e.g., STA2) and, after successfully contending for the channel, transmitting an ICF including a BSRP to STA2. STA2 can then reply with an ICR (e.g., a M-STA BA) including a LLI set to a value of 1 to indicate it has LL UL data to transmit to the AP. However, the AP can decide to transmit additional data to STA2 (e.g., DL PPDU) with a RDG value set to zero to indicate that RD has not been granted (e.g., that STA2 should not transmit its LL data in the TXOP at that time) and STA2 can reply to the AP with a BA, according to some embodiments. At some time during the TXOP, the AP can determine to grant the RD protocol, such that STA2 can transmit its LL UL data. Accordingly, the AP can send a data or QoS Null frame to STA2 that includes a RDG value set to 1. STA2 can reply to the AP using a BA and further transmit its LL data including a RDG value set to 1 and, for the last PPDU(s) of the LL data, set a RDG value equal to 0 to indicate that no more LL data will be transmitted. After receiving each LL data transmission, the AP can transmit a BA to STA2 to acknowledge successful reception of the data, according to some embodiments.

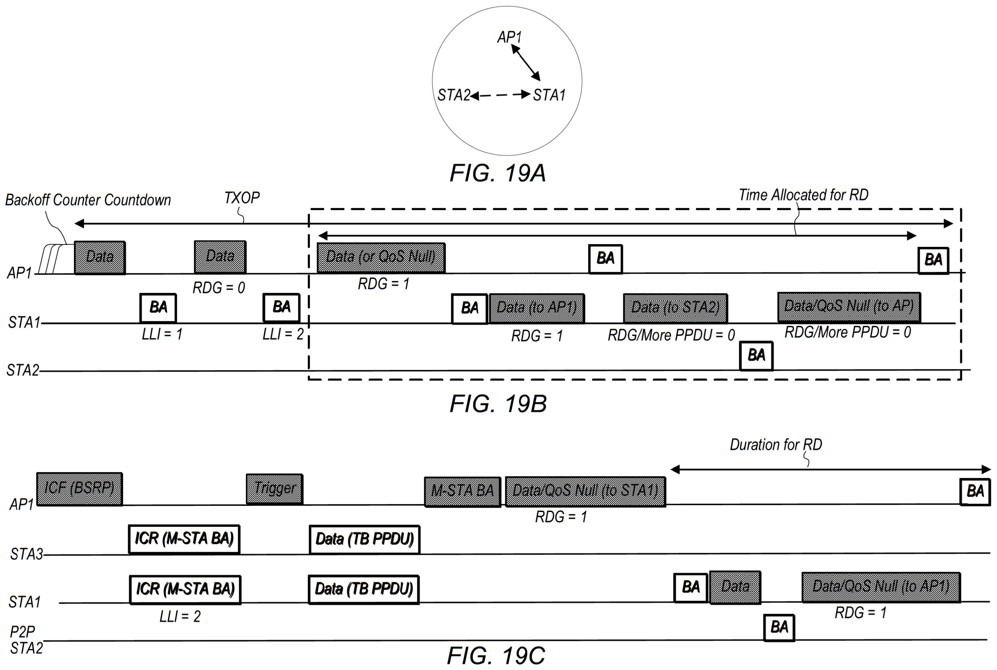

### Figures 19A-C - Enhanced Reverse Direction (RD) Protocols - Additional Examples of DL TXOP

Figures 19A-C illustrate additional examples of enhanced RD protocols involving a DL TXOP, according to some embodiments. These RD protocols can allow a TXOP-responder to request RD and/or transmission to a peer device from the TXOP-owner, according to some embodiments. For example, a STA can set a LLI equal to a value of 2 in a BA or M-BA frame to request RD and/or transmission to a peer device (e.g., another STA) from the TXOP-owner. Accordingly, when the TXOP-owner decides to grant RD, it can set RDG equal to a value of 1. Thereafter, the baseline RD/TXS procedure can be considered to be in effect, according to some embodiments. In some embodiments, the TXOP-owner can need to protect the medium for the whole TXOP duration and the time allocated for RD and/or transmission to other STAs can be set in the duration of the RDG PPDU, according to some embodiments.

Figure 19A illustrates an environment/scenario involving AP1 that is communicating with STA1 and a peer STA (e.g., STA2) that STA1 can seek to transmit LL data to, according to some embodiments. Figure 19B illustrates example signaling between a TXOP-responder (e.g., STA1) and AP1 to request RD and/or transmission to a peer device (e.g., STA2) from the TXOP-owner (e.g., AP1), according to some embodiments. For example, Figure 19B illustrates AP1 communicating with STA1 and, after successfully contending for the channel, transmitting data to STA1. STA1 can then reply with a BA including a LLI set to a value of 1 to indicate it has LL UL data to transmit to the AP. However, AP1 can decide to transmit additional data to STA1 with a RDG value set to zero to indicate that RD has not been granted (e.g., that STA1 should not transmit its LL data in the TXOP at that time). STA1 can reply to AP1 with another BA including the LLI value set to 2 to indicate that it also has LL data to transmit to another STA (e.g., a peer STA such as STA2), according to some embodiments. During the TXOP, AP1 can determine to grant the RD protocol, such that STA1 can transmit its LL data to AP1 and/or STA 2. Accordingly, AP1 can send a data or QoS Null frame to STA1 that includes a RDG value set to 1. STA1 can reply to AP1 using a BA and further transmit its LL UL data including a RDG value set to 1 to the AP and subsequently receive a BA from AP1, according to some embodiments. Then, STA1 can transmit LL data to STA2 including a RDG/More PPDU value equal to 0 to indicate that no more LL data will be transmitted to STA2. STA1 can then receive a BA from STA2 and lastly transmit additional LL data to AP1 including a RDG/More PPDU value equal to 0 to indicate that no more LL data will be transmitted to AP1. AP1 can then transmit a BA to STA1 acknowledging successful reception of the data, according to some embodiments.

Figure 19C illustrates example signaling between AP1 and multiple STAs, including STA1 and STA3. Additionally, STA1 can have a peer-to-peer (P2P) connection with an additional STA (e.g., STA2), according to some embodiments. After successfully contending for the channel, AP1 can transmit an ICF including a BSRP to STA1 and STA3. Accordingly, the STAs (STA1 and STA3) can reply with ICRs (e.g., M-STA BAs [also called M-BAs]) and STA1 can include an LLI in its M-STA BA set to a value of 2 to indicate it has LL data to transmit to its peer STA2. Accordingly, AP1 can transmit a trigger frame to STA3 and STA1 to trigger their data transmissions (e.g., TB PPDUs) to AP1. AP1 can then transmit a M-STA BA and a data or QoS Null frame to STA1 with a RDG value set to 1, e.g., to grant the RD protocol such that STA1 can transmit its LL data to STA2. Accordingly, STA1 can reply to AP1 using a BA and further transmit its LL data to STA2 and subsequently receive a BA from STA2, according to some embodiments. Then, STA1 can transmit additional LL data (e.g., via a data or QoS Null frame) to AP1 and include a RDG value equal to 1, according to some embodiments. AP1 can then transmit a BA to STA1 acknowledging successful reception of the data, according to some embodiments.

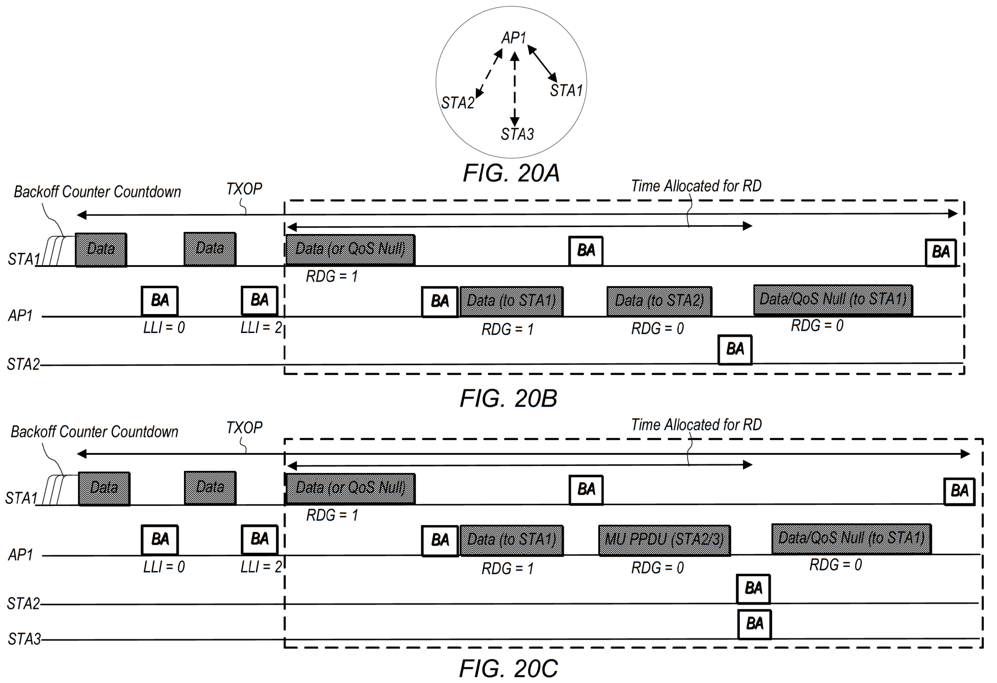

### Figures 20A-C - Enhanced Reverse Direction (RD) Protocols - Additional Examples of UL TXOP

Figures 20A-C illustrate additional examples of enhanced RD protocols involving a UL TXOP, according to some embodiments. For example, Figures 20A-C can correspond to a scenario in which an AP requests (from a TXOP-owner STA) RD to serve another STA, according to some embodiments. Figure 20A illustrates an environment/scenario involving AP1 communicating with STA1, in which AP1 has data to transmit to one or more other STAs (e.g., STA2 and/or STA3), according to some embodiments.

Figure 20B illustrates AP1 communicating with STA1 (e.g., the TXOP holder) which, after successfully contending for the channel, can transmit data to AP1. AP1 can then reply with a BA including a LLI set to a value of 0 to indicate that, at that time, it does not have LL data to transmit to STA1. STA1 can then transmit additional data to AP1 and AP1 can reply with another BA including an LLI set to a value of 2 to indicate it has LL data to transmit to another STA (e.g., STA2). During the TXOP, STA1 can determine to grant the RD protocol, such that AP1 can transmit LL data to STA 2. Accordingly, STA1 can transmit a data or QoS Null frame to AP1 that includes a RDG value set to 1. AP1 can respond to STA1 using a BA and further transmit LL data including a RDG value set to 1 to STA1 and subsequently receive a BA from STA1, according to some embodiments. Then, AP1 can transmit LL data to STA2 including a RDG value equal to 0 to indicate that no more LL data will be transmitted to STA2. AP1 can receive a BA from STA2 and then, optionally, transmit additional LL data to STA1 including a RDG value equal to 0 to indicate that no more LL data will be transmitted to STA1. STA1 can transmit a BA to AP1 acknowledging successful reception of the data, according to some embodiments.

Figure 20C illustrates example signaling between AP1 and multiple STAs including STA1, STA2, and STA3. STA1 (e.g., the TXOP holder) can, after successfully contending for the channel, transmit data to AP1. AP1 can reply with a BA including a LLI set to a value of 0 to indicate that, at that time, it does not have LL data to transmit to STA1. STA1 can then transmit additional data to AP1 and AP1 can reply with another BA including a LLI set to a value of 2 to indicate it has LL data to transmit to additional STAs (e.g., STA2 and STA3). At some point during the TXOP, STA1 can determine to grant the RD protocol such that AP1 can transmit its LL data to STA2 and STA3. Accordingly, STA1 can transmit a data or QoS Null frame to AP1 that includes a RDG value set to 1. AP1 can respond to STA1 using a BA and further transmit LL data including a RDG value set to 1 to STA1. AP1 also can receive a BA from STA1, according to some embodiments. Further, AP1 can transmit LL data (via a MU PPDU) addressed to STA2 and STA3, and can include a RDG value equal to 0 to indicate that no more LL data will be transmitted to STA2 and STA3. AP1 can receive a BA from STA2 and STA3, and transmit additional LL data to STA1 including a RDG value equal to 0 to indicate that no more LL data will be transmitted to STA1. STA1 can then transmit a BA to AP1 acknowledging successful reception of the data, according to some embodiments.

### Additional Information

Regarding RD protocols, an AP acting as an RD Responder can possibly to send MU PPDUs to multiple STAs or alternatively can possibly to send a basic TF to multiple STAs. However, one of the STAs can be considered to be the RD initiator, according to some embodiments. In a RD protocol procedure, a TXOP-owner can allow a TXOP-responder to take control of the wireless medium and transmit for an unspecified duration (but still within the TXOP limit), according to some embodiments. The signaling for RD can be included in RDG subfields in a HT Control field, according to some embodiments. This field/bit can be interpreted as RDG or More PPDU: RDG/More PPDU and can be interpreted differently by an RD Responder, a RD Initiator, and/or a recipient of a multi-user request to send (MU-RTS) TXS trigger frame, according to some embodiments. For example, once a TXOP owner decides to provide control of the TXOP to a TXOP-responder, the TXOP-owner can set a RDG/MorePPDU bit to 1. Accordingly if the TXOP-responder determines to use a portion of the remainder of the TXOP, it can set the RDG/MorePPDU to 1, according to some embodiments. Alternatively, when the TXOP-responder doesn't have anymore data to transmit, it can set the RDG/MorePPDU bit to 0, according to some embodiments.

Regarding triggered TXOP Sharing (TXS), a MU-RTS TXS Trigger frame can be characterized as an MU-RTS with a "Triggered TXOP Sharing Mode" subfield set to a nonzero value, according to some embodiments. Accordingly, an extremely high throughput (EHT) STA can use the time allocated (during TXS Mode 2) for transmission of one or more non-TB PPDUs that are addressed to the AP or another STA, according to some embodiments. For example, the EHT STA can use the time allocated (during TXS Mode 2) for transmission of one or more non-TB PPDUs that are addressed to a peer STA of a P2P link or might use the allocated time for non-infrastructure network communication, according to some embodiments.

### Example Embodiments

In some embodiments, a method by a first station (STA) can include, transmitting, to a second STA , first signaling comprising a first indication associated with a low latency (LL) capability. The method can also include receiving, from the second STA, second signaling comprising a second indication and transmitting, to the second STA and subsequent to receiving the second indication, third signaling in accordance with the LL capability. The method can also include receiving, from the second STA, an acknowledgement associated with the third signaling.

According to some embodiments, the first indication can comprise a LL indicator set to a non-zero value. Additionally or alternatively, the second indication can comprise a reverse direction (RD) indicator set to a non-zero value and the third signaling can include comprise a RD indicator set to the non-zero value.

In some embodiments, the method can further include transmitting, to the second STA, additional signaling comprising an additional indication. Additionally or alternatively, the additional indication can include an other RD indicator set to a value of zero, according to some embodiments.

According to some embodiments, the second signaling can be received in one of a data frame, a quality of service (QoS) null frame, a clear to send (CTS) frame, or a transmission sharing (TXS) frame. Additionally, the method can include exchanging, with the second STA, one or more parameters associated with a LL session, according to some embodiments. Furthermore, the method can include disabling, at a time associated with a parameter of the one or more parameters, the LL session.

In some embodiments, the first signaling can be indicated in one of a control response frame (CRF), a block acknowledgement (BA) frame, an initial control response (ICR) frame, or a multi-STA BA (M-BA) frame. According to some embodiments, the method can include receiving, prior to the first signaling, initial signaling comprising an initial control frame (ICF).

According to other embodiments, a method by a first station STA can include transmitting initial signaling to a second STA and receiving, from the second STA, first signaling comprising a first indication associated with a LL capability. The method can also include transmitting, to the second STA, second signaling comprising a second indication and receiving, from the second STA and subsequent to transmitting the second indication, third signaling in accordance with the LL capability. The method can also include transmitting, to the second STA, acknowledgement signaling associated with the third signaling.

According to some embodiments, an apparatus can include a processor configured to, when executing instructions stored in a memory, cause an access point (AP) to perform operations including receiving, from one or more respective station STAs, respective first signaling comprising one or more first indications associated with a LL capability. Additionally, the operations can also include transmitting, to the one or more respective STAs, respective second signaling comprising one or more second indications and receiving, from the one or more respective STAs, respective third signaling in accordance with the LL capability. The operations can also include transmitting, to the one or more respective STAs, acknowledgment signaling associated with the third signaling, according to some embodiments.

In some embodiments, the one or more respective STAs can be non-enhanced multi-link single radio (non-EMLSR) STAs. Additionally or alternatively, the respective second signaling can be transmitted in one or more clear to send (CTS) frames which can be transmitted sequentially to the one or more respective STAs in an order corresponding to an order in which the one or more first indications were received or in a trigger frame (TF) transmitted to the one or more respective STAs, according to some embodiments.

According to other embodiments, the one or more respective STAs can be enhanced multi-link single radio (EMLSR) STAs and the respective second signaling can be transmitted in a CTS frame which indicates for at least one of the EMLSR STAs to transition to a listening mode.

Embodiments of the present disclosure can be realized in any of various forms. For example, some embodiments can be realized as a computer-implemented method, a computer-readable memory medium, or a computer system. Other embodiments can be realized using one or more custom-designed hardware devices such as ASICs. Other embodiments can be realized using one or more programmable hardware elements such as FPGAs.

In some embodiments, a non-transitory computer-readable memory medium can be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a wireless device can be configured to include a processor (and/or a set of processors) and a memory medium, where the memory medium stores program instructions, where the processor is configured to read and execute the program instructions from the memory medium, where the program instructions are executable to cause the wireless device to implement any of the various method embodiments described herein (or, any combination of the method embodiments described herein, or, any subset of any of the method embodiments described herein, or, any combination of such subsets). The device can be realized in any of various forms.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A method, comprising:
by a first station (STA):
transmitting, to a second STA, first signaling comprising a first indication associated with a low latency (LL) capability;
receiving, from the second STA, second signaling comprising a second indication;
transmitting, to the second STA subsequent to receiving the second indication, third signaling in accordance with the LL capability; and
receiving, from the second STA, an acknowledgement associated with the third signaling.

2. The method of claim 1, wherein the first indication comprises a LL indicator set to a non-zero value.

3. The method of claim 1, wherein the second indication comprises a reverse direction (RD) indicator set to a non-zero value.

4. The method of claim 3, wherein the third signaling comprises the RD indicator set to the non-zero value.

5. The method of claim 3, further comprising:
transmitting, to the second STA, additional signaling comprising an additional indication.

6. The method of claim 5, wherein the additional indication comprises an other RD indicator set to a value of zero.

7. The method of claim 1, wherein the second signaling is received in one of:
a data frame;
a quality of service (QoS) null frame;
a clear to send (CTS) frame; or
a transmission sharing (TXS) frame.

8. The method of claim 1, further comprising:
exchanging, with the second STA, one or more parameters associated with a LL session; and
disabling, at a time associated with a parameter of the one or more parameters, the LL session.

9. The method of claim 1, wherein the first signaling is indicated in one of:
a control response frame (CRF);
a block acknowledgement (BA) frame;
an initial control response (ICR) frame; or
a multi-STA BA (M-BA) frame.

10. A method, comprising:
by a first station (STA):
transmitting initial signaling to a second STA;
receiving, from the second STA, first signaling comprising a first indication associated with a low latency (LL) capability;
transmitting, to the second STA, second signaling comprising a second indication;
receiving, from the second STA subsequent to transmitting the second indication, third signaling in accordance with the LL capability; and
transmitting, to the second STA, acknowledgement signaling in response to the third signaling.

11. The method of claim 10, further comprising:
exchanging, with the second STA, one or more parameters associated with a LL session; and
disabling, at a time associated with a parameter of the one or more parameters, the LL session.

12. The method of claim 10, wherein the first indication comprises a LL indicator set to a non-zero value.

13. The method of claim 10, wherein the second indication comprises a reverse direction (RD) indicator set to a non-zero value.

14. An apparatus, comprising:
a processor configured to, when executing instructions stored in a memory, perform operations according to the method of any of claims 1-13.

15. A non-transitory computer readable storage medium storing program instructions executable by one or more processors to cause a first station (STA) to perform operations according to the method of any of claims 1-13.
